# EUROPEAN PATENT SPECIFICATION

(11) **EP 4 472 102 B1**
(45) Date of publication and mention of the grant of the patent: **28.10.2026**
(21) Application number: 23759012.0
(22) Date of filing: 08.02.2023
(51) Int. Cl.: H04B 7/185, H04W 84/06, H04W 48/08, H04W 48/16, H04W 48/18, H04W 76/11, H04W 76/12

(54) **COMMUNICATION METHOD AND APPARATUS**
KOMMUNIKATIONSVERFAHREN UND -VORRICHTUNG
PROCÉDÉ ET APPAREIL DE COMMUNICATION

(30) Priority: 22.02.2022 CN 202210159832
(43) Date of publication of application: 04.12.2024
(73) Proprietor: Huawei Technologies Co., Ltd., Shenzhen, Guangdong 518129 (CN)
(72) Inventor: LI, Yongcui, Shenzhen, Guangdong 518129 (CN); NI, Hui, Shenzhen, Guangdong 518129 (CN); WU, Yizhuang, Shenzhen, Guangdong 518129 (CN)
(74) Representative: Isarpatent
(86) International application number: PCT/CN2023/074905
(87) International publication number: WO 2023/160387

(56) References cited:
- EP-A1- 4 443 960
- WO-A1-2018/059514
- CN-A- 110 169 089
- CN-A- 110 519 171
- US-A1- 2018 192 390
- US-A1- 2018 192 471
- US-A1- 2020 396 000
- "3rd Generation Partnership Project; Technical Specification Group Services and System Aspects; Study on architecture aspects for using satellite access in 5G (Release 16)", 11 February 2020 (2020-02-11), XP052355231, Retrieved from the Internet <URL:https://ftp.3gpp.org/tsg_ran/WG2_RL2/TSGR2_109_e/Docs/R2-2000054.zip 23737-120.zip 23737-120_MCCclean.docx> [retrieved on 20200211]
- "3rd Generation Partnership Project; Technical Specification Group Services and System Aspects Study on management and orchestration aspects with integrated satellite components in a 5G network (Release 17)", no. V0.7.0, 2 November 2020 (2020-11-02), pages 1 - 28, XP051961638, Retrieved from the Internet <URL:https://ftp.3gpp.org/Specs/archive/28_series/28.808/28808-070.zip 28808-070.docx> [retrieved on 20201102]
- HUAWEI TECHNOLOGIES CO., LTD.: "S5-174223 "Rel-15 pCR 32.899 Network Slicing for Tenant Based Charging"", 3GPP TSG_SA\WG5_TM, no. TSGS5_114, 11 August 2017 (2017-08-11), XP093086895

## Description

### TECHNICAL FIELD

This disclosure generally relates to the field of communication technologies, in particular to establishing a user plane connection in a network comprising a terrestrial and non-terrestrial entities.

The invention, more specifically, relates to communication methods, a communication device, and a computer-readable storage medium.

### BACKGROUND

After an access network device and a user plane function network element are disposed on a satellite, in a process of establishing a user plane connection for a terminal device, the satellite needs to perform information interaction with a terrestrial network element for a plurality of times. Consequently, a latency of establishing the user plane connection is long, and user experience is degraded. Therefore, after the access network device and the user plane function network element are disposed on the satellite, how to reduce the latency of establishing the user plane connection is an urgent problem to be resolved.

"3rd Generation Partnership Project; Technical Specification Group Services and System Aspects; Study on architecture aspects for using satellite access in 5G (Release 16)", 3GPP DRAFT; R2-2000054.ZIP 23737-120, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, 11 February 2020 (2020-02-11), XP052355231 is a relevant standard document in 5G which relates to the subject matter discussed in the present disclosure and serves as background knowledge for the present invention.

US 2020/0396000 A1 discloses that a wireless device receives, from a non-terrestrial network (NTN) base station, access network information indicating an access network type of a plurality of access network types comprising: a geostationary earth orbit (GEO) access network type; and a low earth orbit (LEO) access network type. Based on the access network type, a first non-access stratum (NAS) period among a plurality of NAS period are selected. The plurality of NAS periods comprise: a first value associated with the GEO access network type; and a second value associated with the LEO access network type. A NAS procedure is initiated by sending, to an access and mobility management function (AMF) via the NTN base station, a first NAS request message. A start of the first NAS period is then based on the sending. The NAS procedure is aborted in response to an expiration of the first NAS period.

### SUMMARY

The object of the present invention is to provide communication methods, a communication device, and a computer-readable storage medium, to reduce a latency of establishing a user plane link. This object is solved by the attached independent claims and further embodiments and improvements of the invention are listed in the attached dependent claims. Hereinafter, up to the "brief description of the drawings", expressions like "...aspect according to the invention", "according to the invention", or "the present invention", relate to technical teaching of the broadest embodiment as claimed with the independent claims. Expressions like "implementation", "design", "optionally", "preferably", "scenario", "aspect" or similar relate to further embodiments as claimed, and expressions like "example", "...aspect according to an example", "the disclosure describes", or "the disclosure" describe technical teaching which relates to the understanding of the invention or its embodiments, which, however, is not claimed as such.

The invention is as defined by the claims. Any further reference to aspect or embodiment in the detailed description is solely for better understanding of the invention. According to a first aspect according to the invention, the invention provides a communication method which includes:
A session management network element obtains an identifier of a data network DN accessed by a terminal device and/or an identifier of a network slice accessed by the terminal device. The session management network element determines, based on the identifier of the DN and/or the identifier of the network slice, a service type requested by the terminal device. The session management network element requests, from an access network device on a satellite, tunnel information corresponding to the service type. The session management network element receives, from the access network device, the tunnel information corresponding to the service type.

According to the method in this application, the session management network element determines, based on the identifier of the DN accessed by the terminal and/or the identifier of the network slice accessed by the terminal, the service type requested by the terminal device, and further requests, from the S-gNB, the tunnel information corresponding to the service type. This can reduce a quantity of interactions between the satellite and a terrestrial network element, so that a process of establishing a user plane connection is simplified, a latency of establishing the user plane connection is reduced, and user experience is improved.

With reference to the first aspect, in some implementations of the first aspect, that the session management network element requests, from an access network device, tunnel information corresponding to the service type includes: The session management network element requests, from the access network device, first tunnel information of the access network device, where the service type is a terrestrial service that needs no user plane function network element, and the first tunnel information is used to establish a tunnel between the access network device and a protocol data unit session anchor PSA.

With reference to the first aspect, in some implementations of the first aspect, the method further includes:
The session management network element sends the first tunnel information to the PSA.

With reference to the first aspect, that the session management network element requests, from an access network device, tunnel information corresponding to the service type includes according to the invention: The session management network element requests, from the access network device, second tunnel information of a user plane function network element on the satellite, where the service type is a terrestrial service that needs a user plane function network element, and the second tunnel information is used to establish a tunnel between the user plane function network element on the satellite and a protocol data unit session anchor PSA.

With reference to the first aspect, in some implementations of the first aspect, the method further includes:
The session management network element sends the second tunnel information to the PSA.

With reference to the first aspect, in some implementations of the first aspect, that the session management network element requests, from an access network device, tunnel information corresponding to the service type includes: The session management network element requests, from the access network device, second tunnel information of a user plane function network element on the satellite and third tunnel information of the user plane function network element on the satellite, where the service type is a non-terrestrial service in which a protocol data unit session anchor PSA exists, the second tunnel information is used to establish a tunnel between the user plane function network element on the satellite and a PSA, and the third tunnel information is used to establish a tunnel between the user plane function network element on the satellite and a peer user plane function network element.

With reference to the first aspect, in some implementations of the first aspect, the method further includes:
The session management network element sends the second tunnel information to the PSA. The session management network element sends the third tunnel information to the peer user plane function network element.

With reference to the first aspect, in some not claimed implementations of the first aspect, that the session management network element requests, from an access network device, tunnel information corresponding to the service type includes: The session management network element requests, from the access network device, third tunnel information of a user plane function network element on the satellite, where the service type is a non-terrestrial service in which no protocol data unit session anchor PSA exists, and the third tunnel information is used to establish a tunnel between the user plane function network element on the satellite and a peer user plane function network element.

With reference to the first aspect, in some not claimed implementations of the first aspect, the method further includes:
The session management network element sends the third tunnel information to the peer user plane function network element.

According to a second aspect according to the invention, the invention also provides the following communication method which includes:
An access network device receives first information from a terminal device, where the first information indicates a service type requested by the terminal device. The access network device obtains, based on the first information, tunnel information corresponding to the service type. The access network device sends the tunnel information to a session management network element, where the tunnel information is used to establish a user plane connection corresponding to the service type. The access network device is located on a satellite, and the session management network element is located on the ground.

According to the method in this application, in a process of establishing the user plane connection, the S-gNB obtains, based on the service type requested by the UE, the tunnel information corresponding to the service type, and sends, to the SMF, the tunnel information corresponding to the service type. Therefore, according to the method in this application, a quantity of interactions between the satellite and a terrestrial network element can be reduced, so that the process of establishing the user plane connection is simplified, a latency of establishing the user plane connection is reduced, and user experience is improved.

With reference to the second aspect, in some implementations of the second aspect:
The service type is a terrestrial service that needs no user plane function network element, and the tunnel information includes first tunnel information of the access network device, where the first tunnel information is used to establish a tunnel between the access network device and a protocol data unit session anchor PSA. Alternatively, the service type is a terrestrial service that needs a user plane function network element, and the tunnel information includes second tunnel information of a user plane function network element on the satellite, where the second tunnel information is used to establish a tunnel between the user plane function network element on the satellite and a PSA. Alternatively, the service type is a non-terrestrial service in which a PSA exists, and the tunnel information includes second tunnel information of a user plane function network element on the satellite and third tunnel information of the user plane function network element on the satellite, where the second tunnel information is used to establish a tunnel between the user plane function network element on the satellite and a PSA, and the third tunnel information is used to establish a tunnel between the user plane function network element on the satellite and a peer user plane function network element. Alternatively, the service type is a non-terrestrial service in which no PSA exists, and the tunnel information includes third tunnel information of a user plane function network element on the satellite, where the third tunnel information is used to establish a tunnel between the user plane function network element on the satellite and a peer user plane function network element.

With reference to the second aspect, in some implementations of the second aspect, that the access network device obtains tunnel information includes:
The access network device obtains the first tunnel information locally. The access network device obtains the second tunnel information and/or the third tunnel information locally or from the user plane function network element on the satellite.

With reference to the second aspect, the method further includes according to the invention:
The access network device receives second information from the session management network element via a mobility management network element, where the second information includes one or more of the following:
tunnel information of the peer user plane function network element, tunnel information of a PSA selected by the session management network element, and a packet forwarding rule.

With reference to the second aspect, the method further includes according to the invention: The access network device sends the second information to the user plane network element on the satellite.

With reference to the second aspect, in some implementations of the second aspect, the method further includes: The access network device sends a session response message to the mobility management network element, where the session response message does not include the first tunnel information of the access network device, and the first tunnel information is used to establish the tunnel between the access network device and the protocol data unit session anchor PSA.

According to a third aspect, wherein the third aspect and any of its implementations and options below are not claimed, a communication method is provided, and includes:
A terminal device generates first information, where the first information indicates a service type requested by the terminal device. The terminal device sends the first information to an access network device on a satellite.

According to a fourth aspect, wherein the fourth aspect and any of its implementations and options below are not claimed, a communication method is provided, and includes:
A mobility management network element receives an identifier of an access network device from the access network device on a satellite, and an identifier of a data network DN accessed by a terminal device and/or an identifier of a network slice accessed by the terminal device. The mobility management network element determines an identifier of a user plane function network element on the satellite based on the identifier of the access network device. The mobility management network element sends, to a session management network element, the identifier of the access network device, the identifier of the user plane function network element on the satellite, and the identifier of the DN and/or the identifier of the network slice.

With reference to the fourth aspect, in some implementations of the fourth aspect, that the mobility management network element determines an identifier of a user plane function network element on the satellite based on the identifier of the access network device includes:
The mobility management network element determines the identifier of the user plane function network element on the satellite based on a correspondence between the access network device and the user plane function network element on the satellite.

With reference to the fourth aspect, in some implementations of the fourth aspect, the method further includes:
The mobility management network element receives first information from the session management network element. The mobility management network element sends the first information to the access network device, where the first information includes one or more of the following: tunnel information of a peer user plane function network element, tunnel information of a protocol data unit session anchor PSA selected by the session management network element, a packet forwarding rule, and fourth tunnel information of the user plane function network element on the satellite. The fourth tunnel information is used to establish a tunnel between the access network device and the user plane function network element on the satellite.

With reference to the fourth aspect, in some implementations of the fourth aspect, the method further includes:
The mobility management network element receives a session response message from the access network device, where the session response message does not include first tunnel information of the access network device, where the first tunnel information is used to establish a tunnel between the access network device and the protocol data unit session anchor PSA.

According to a fifth aspect, wherein the fifth aspect and any of its implementations and options below are not claimed, a communication method is provided, and includes:
A session management network element receives, from a mobility management network element, an identifier of a user plane function network element on a satellite accessed by a terminal device, an identifier of an access network device on the satellite, and an identifier of a data network DN accessed by the terminal device and/or an identifier of a network slice accessed by the terminal device. The session management network element determines, based on the identifier of the DN and/or the identifier of the network slice, a service type requested by the terminal device. The session management network element determines, based on the identifier of the access network device or the identifier of the user plane function network element on the satellite, tunnel information corresponding to the service type.

According to the method in this application, the SMF determines, based on the identifier of the S-gNB or the identifier of the S-UPF, the tunnel information corresponding to the service type requested by the UE. Therefore, according to the method in this application, a quantity of interactions between the satellite and a terrestrial network element can be reduced, so that a process of establishing a user plane connection is simplified, and a latency of establishing the user plane connection is reduced.

With reference to the fifth aspect, in some implementations of the fifth aspect, that the session management network element determines, based on the identifier of the access network device or the identifier of the user plane function network element on the satellite, tunnel information corresponding to the service type includes:
The session management network element determines, based on a tunnel address range corresponding to the access network device or a tunnel address range corresponding to the user plane function network element on the satellite, the tunnel information corresponding to the service type.

With reference to the fifth aspect, in some implementations of the fifth aspect, that the session management network element determines tunnel information corresponding to the service type includes: The session management network element determines first tunnel information of the access network device based on the identifier of the access network device, where the service type is a terrestrial service that needs no user plane function network element, and the first tunnel information is used to establish a tunnel between the access network device and a protocol data unit session anchor PSA.

With reference to the fifth aspect, in some implementations of the fifth aspect, the method further includes:
The session management network element sends the first tunnel information to the PSA.

With reference to the fifth aspect, in some implementations of the fifth aspect, that the session management network element determines tunnel information corresponding to the service type includes: The session management network element determines second tunnel information of the user plane function network element on the satellite based on the identifier of the user plane function network element on the satellite, where the service type is a terrestrial service that needs a user plane function network element, and the second tunnel information is used to establish a tunnel between the user plane function network element on the satellite and a protocol data unit session anchor PSA.

With reference to the fifth aspect, in some implementations of the fifth aspect, the method further includes:
The session management network element sends the second tunnel information to the PSA.

With reference to the fifth aspect, in some implementations of the fifth aspect, that the session management network element determines tunnel information corresponding to the service type includes: The session management network element determines second tunnel information of the user plane function network element on the satellite and third tunnel information of the user plane function network element on the satellite based on the identifier of the user plane function network element on the satellite, where the service type is a non-terrestrial service in which a protocol data unit session anchor PSA exists, the second tunnel information is used to establish a tunnel between the user plane function network element on the satellite and a PSA, and the third tunnel information is used to establish a tunnel between the user plane function network element on the satellite and a peer user plane function network element.

With reference to the fifth aspect, in some implementations of the fifth aspect, the method further includes:
The session management network element sends the second tunnel information to the PSA. The session management network element sends the third tunnel information to the peer user plane function network element.

With reference to the fifth aspect, in some implementations of the fifth aspect, that the session management network element determines tunnel information corresponding to the service type includes: The session management network element determines third tunnel information of the user plane function network element on the satellite based on the identifier of the user plane function network element on the satellite, where the service type is a non-terrestrial service in which no protocol data unit session anchor PSA exists, and the third tunnel information is used to establish a tunnel between the user plane function network element on the satellite and a peer user plane function network element.

With reference to the fifth aspect, in some implementations of the fifth aspect, the method further includes:
The session management network element sends the third tunnel information to the peer user plane function network element.

With reference to the fifth aspect, in some implementations of the fifth aspect, the method further includes:

The session management network element sends first information to the access network device via the mobility management network element, where the first information includes one or more of the following: tunnel information of the peer user plane function network element, tunnel information of a protocol data unit session anchor PSA selected by the session management network element, a packet forwarding rule, and fourth tunnel information of the user plane function network element on the satellite. The fourth tunnel information is used to establish a tunnel between the access network device and the user plane function network element on the satellite.

According to a sixth aspect, wherein the sisxth aspect and any of its implementations and options below are not claimed, a communication method is provided, and includes:
A session management network element receives first information from an access network device on a satellite, where the first information includes an identifier of a data network DN accessed by a terminal device and/or an identifier of a network slice accessed by the terminal device, first tunnel information of the access network device, second tunnel information of a user plane function network element on the satellite, and third tunnel information of the user plane function network element on the satellite. The first tunnel information is used to establish a tunnel between the access network device and a protocol data unit session anchor PSA, the second tunnel information is used to establish a tunnel between the user plane function network element on the satellite and the PSA, and the third tunnel information is used to establish a tunnel between the user plane function network element on the satellite and a peer user plane function network element. The session management network element determines, based on the identifier of the DN and/or the identifier of the network slice, a service type requested by the terminal device. The session management network element obtains, from the first information based on the service type, tunnel information corresponding to the service type.

According to the method in this application, the SMF may obtain, from the first information based on the service type requested by the UE, the tunnel information corresponding to the service type requested by the UE. Therefore, according to the method in this application, a quantity of interactions between the satellite and a terrestrial network element can be reduced, so that a process of establishing a user plane connection is simplified, and a latency of establishing the user plane connection is reduced.

With reference to the sixth aspect, in some implementations of the sixth aspect, that the session management network element obtains tunnel information corresponding to the service type includes: The session management network element obtains the first tunnel information from the first information, where the service type is a terrestrial service that needs no user plane function network element.

With reference to the sixth aspect, in some implementations of the sixth aspect, the method further includes:
The session management network element sends the first tunnel information to the PSA.

With reference to the sixth aspect, in some implementations of the sixth aspect, that the session management network element obtains tunnel information corresponding to the service type includes: The session management network element obtains the second tunnel information from the first information, where the service type is a terrestrial service that needs a user plane function network element.

With reference to the sixth aspect, in some implementations of the sixth aspect, the method further includes:
The session management network element sends the second tunnel information to the PSA.

With reference to the sixth aspect, in some implementations of the sixth aspect, that the session management network element obtains tunnel information corresponding to the service type includes: The session management network element obtains the second tunnel information and the third tunnel information from the first information, where the service type is a non-terrestrial service in which a PSA exists.

With reference to the sixth aspect, in some implementations of the sixth aspect, the method further includes:
The session management network element sends the second tunnel information to the PSA. The session management network element sends the third tunnel information to the peer user plane function network element.

With reference to the sixth aspect, in some implementations of the sixth aspect, that the session management network element obtains tunnel information corresponding to the service type includes: The session management network element obtains the third tunnel information from the first information, where the service type is a non-terrestrial service in which no PSA exists.

With reference to the sixth aspect, in some implementations of the sixth aspect, the method further includes:
The session management network element sends the third tunnel information to the peer user plane function network element.

With reference to the sixth aspect, in some implementations of the sixth aspect, the method further includes:
The session management network element sends first indication information to the access network device and/or the user plane function network element on the satellite. The service type is a terrestrial service that needs no user plane function network element, and the first indication information indicates to delete the second tunnel information and the third tunnel information. Alternatively, the service type is a terrestrial service that needs a user plane function network element, and the first indication information indicates to delete the third tunnel information. Alternatively, the service type is a non-terrestrial service in which no PSA exists, and the first indication information indicates to delete the second tunnel information.

According to a seventh aspect, wherein the seventh aspect and any of its implementations and options below are not claimed, a communication method is provided, and includes:
An access network device obtains first information, where the access network device is located on a satellite, and the first information includes an identifier of a data network DN accessed by a terminal device and/or an identifier of a network slice accessed by the terminal device, first tunnel information of the access network device, second tunnel information of a user plane function network element on the satellite, and third tunnel information of the user plane function network element on the satellite. The first tunnel information is used to establish a tunnel between the access network device and a protocol data unit session anchor PSA, the second tunnel information is used to establish a tunnel between the user plane function network element on the satellite and the PSA, and the third tunnel information is used to establish a tunnel between the user plane function network element on the satellite and a peer user plane function network element. The access network device sends the first information to a session management network element.

With reference to the seventh aspect, in some implementations of the seventh aspect, the method further includes:
The access network device receives first indication information from the session management network element, where the first indication information indicates to delete the second tunnel information and/or the third tunnel information. The access network device deletes the second tunnel information and/or the third tunnel information based on the first indication information.

With reference to the seventh aspect, in some implementations of the seventh aspect, the method further includes:
The access network device sends the first indication information to the user plane function network element on the satellite.

According to an eighth aspect, wherein the eighth aspect and any of its implementations and options below are not claimed, a communication apparatus is provided, and includes:
a transceiver unit and a processing unit connected to the transceiver unit.

The transceiver unit is configured to obtain an identifier of a data network DN accessed by a terminal device and/or an identifier of a network slice accessed by the terminal device. The processing unit is configured to determine, based on the identifier of the DN and/or the identifier of the network slice, a service type requested by the terminal device. The transceiver unit is configured to request, from an access network device on a satellite, tunnel information corresponding to the service type. The transceiver unit is configured to receive, from the access network device, the tunnel information corresponding to the service type.

With reference to the eighth aspect, in some implementations of the eighth aspect:
The transceiver unit is configured to request, from the access network device, first tunnel information of the access network device, where the service type is a terrestrial service that needs no user plane function network element, and the first tunnel information is used to establish a tunnel between the access network device and a protocol data unit session anchor PSA.

With reference to the eighth aspect, in some implementations of the eighth aspect, the transceiver unit is configured to send the first tunnel information to the PSA.

With reference to the eighth aspect, in some implementations of the eighth aspect:
The transceiver unit is configured to request, from the access network device, second tunnel information of a user plane function network element on the satellite, where the service type is a terrestrial service that needs a user plane function network element, and the second tunnel information is used to establish a tunnel between the user plane function network element on the satellite and a PSA.

With reference to the eighth aspect, in some implementations of the eighth aspect, the transceiver unit is configured to send the second tunnel information to the PSA.

With reference to the eighth aspect, in some implementations of the eighth aspect:
The transceiver unit is configured to request, from the access network device, second tunnel information of a user plane function network element on the satellite and third tunnel information of the user plane function network element on the satellite, where the service type is a non-terrestrial service in which a PSA exists, the second tunnel information is used to establish a tunnel between the user plane function network element on the satellite and a PSA, and the third tunnel information is used to establish a tunnel between the user plane function network element on the satellite and a peer user plane function network element.

With reference to the eighth aspect, in some implementations of the eighth aspect, the transceiver unit is configured to send the second tunnel information to the PSA, and the transceiver unit is configured to send the third tunnel information to the peer user plane function network element.

With reference to the eighth aspect, in some implementations of the eighth aspect:
The transceiver unit is configured to request, from the access network device, third tunnel information of a user plane function network element on the satellite, where the service type is a non-terrestrial service in which no PSA exists, and the third tunnel information is used to establish a tunnel between the user plane function network element on the satellite and a peer user plane function network element.

With reference to the eighth aspect, in some implementations of the eighth aspect, the transceiver unit is configured to send the third tunnel information to the peer user plane function network element.

According to a ninth aspect, wherein the ninth aspect and any of its implementations and options below are not claimed, a communication apparatus is provided, and includes:
a transceiver unit and a processing unit connected to the transceiver unit.

The transceiver unit is configured to receive first information from a terminal device, where the first information indicates a service type requested by the terminal device. The transceiver unit is configured to obtain, based on the first information, tunnel information corresponding to the service type. The transceiver unit is configured to send the tunnel information to a session management network element, where the tunnel information is used to establish a user plane connection corresponding to the service type. An access network device is located on a satellite, and the session management network element is located on the ground.

With reference to the ninth aspect, in some implementations of the ninth aspect:
The service type is a terrestrial service that needs no user plane function network element, and the tunnel information includes first tunnel information of the access network device, where the first tunnel information is used to establish a tunnel between the access network device and a protocol data unit session anchor PSA. Alternatively, the service type is a terrestrial service that needs a user plane function network element, and the tunnel information includes second tunnel information of a user plane function network element on the satellite, where the second tunnel information is used to establish a tunnel between the user plane function network element on the satellite and a PSA. Alternatively, the service type is a non-terrestrial service in which a PSA exists, and the tunnel information includes second tunnel information of a user plane function network element on the satellite and third tunnel information of the user plane function network element on the satellite, where the second tunnel information is used to establish a tunnel between the user plane function network element on the satellite and a PSA, and the third tunnel information is used to establish a tunnel between the user plane function network element on the satellite and a peer user plane function network element. Alternatively, the service type is a non-terrestrial service in which no PSA exists, and the tunnel information includes third tunnel information of a user plane function network element on the satellite, where the third tunnel information is used to establish a tunnel between the user plane function network element on the satellite and a peer user plane function network element.

With reference to the ninth aspect, in some implementations of the ninth aspect, the transceiver unit is configured to obtain the first tunnel information locally. The transceiver unit is configured to obtain the second tunnel information and/or the third tunnel information locally or from the user plane function network element on the satellite.

With reference to the ninth aspect, in some implementations of the ninth aspect, the transceiver unit is configured to receive second information from the session management network element via a mobility management network element, where the second information includes one or more of the following: tunnel information of the peer user plane function network element, tunnel information of a PSA selected by the session management network element, and a packet forwarding rule.

With reference to the ninth aspect, in some implementations of the ninth aspect, the transceiver unit is configured to send the second information to the user plane network element on the satellite.

With reference to the ninth aspect, in some implementations of the ninth aspect, the transceiver unit is configured to send a session response message to the mobility management network element, where the session response message does not include the first tunnel information of the access network device, and the first tunnel information is used to establish the tunnel between the access network device and the protocol data unit session anchor PSA.

According to a tenth aspect, wherein the tenth aspect and any of its implementations and options below are not claimed, a communication apparatus is provided, and includes:
a transceiver unit and a processing unit connected to the transceiver unit.

The processing unit is configured to generate first information, where the first information indicates a service type requested by a terminal device. The transceiver unit is configured to send the first information to an access network device on a satellite.

According to an eleventh aspect, wherein the eleventh aspect and any of its implementations and options below are not claimed, a communication apparatus is provided, and includes:
a transceiver unit and a processing unit connected to the transceiver unit.

The transceiver unit is configured to receive an identifier of an access network device from the access network device on a satellite, and an identifier of a data network DN accessed by a terminal device and/or an identifier of a network slice accessed by the terminal device. The processing unit is configured to determine an identifier of a user plane function network element on the satellite based on the identifier of the access network device. The transceiver unit is configured to send, to a session management network element, the identifier of the access network device, the identifier of the user plane function network element on the satellite, and the identifier of the DN and/or the identifier of the network slice.

With reference to the eleventh aspect, in some implementations of the eleventh aspect, the processing unit is configured to determine the identifier of the user plane function network element on the satellite based on a correspondence between the access network device and the user plane function network element on the satellite.

With reference to the eleventh aspect, in some implementations of the eleventh aspect, the transceiver unit is configured to receive first information from the session management network element. The transceiver unit is further configured to send the first information to the access network device. The first information includes one or more of the following: tunnel information of a peer user plane function network element, tunnel information of a protocol data unit session anchor PSA selected by the session management network element, a packet forwarding rule, and fourth tunnel information of the user plane function network element on the satellite, where the fourth tunnel information is used to establish a tunnel between the access network device and the user plane function network element on the satellite.

With reference to the eleventh aspect, in some implementations of the eleventh aspect, the transceiver unit is further configured to receive a session response message from the access network device, where the session response message does not include first tunnel information of the access network device, where the first tunnel information is used to establish a tunnel between the access network device and the protocol data unit session anchor PSA.

According to a twelfth aspect, wherein the twelfth aspect and any of its implementations and options below are not claimed, a communication apparatus is provided, and includes:
a transceiver unit and a processing unit connected to the transceiver unit.

The transceiver unit is configured to receive, from a mobility management network element, an identifier of a user plane function network element on a satellite accessed by a terminal device, an identifier of an access network device on the satellite, and an identifier of a data network DN accessed by the terminal device and/or an identifier of a network slice accessed by the terminal device. The processing unit is configured to determine, based on the identifier of the DN and/or the identifier of the network slice, a service type requested by the terminal device. The processing unit is configured to determine, based on the identifier of the access network device or the identifier of the user plane function network element on the satellite, tunnel information corresponding to the service type.

With reference to the twelfth aspect, in some implementations of the twelfth aspect, the processing unit is configured to determine, based on a tunnel address range corresponding to the access network device or a tunnel address range corresponding to the user plane function network element on the satellite, the tunnel information corresponding to the service type.

With reference to the twelfth aspect, in some implementations of the twelfth aspect:
The processing unit is configured to determine first tunnel information of the access network device based on the identifier of the access network device, where the service type is a terrestrial service that needs no user plane function network element, and the first tunnel information is used to establish a tunnel between the access network device and a protocol data unit session anchor PSA.

With reference to the twelfth aspect, in some implementations of the twelfth aspect, the transceiver unit is configured to send the first tunnel information to the PSA.

With reference to the twelfth aspect, in some implementations of the twelfth aspect:
The processing unit is configured to determine second tunnel information of the user plane function network element on the satellite based on the identifier of the user plane function network element on the satellite, where the service type is a terrestrial service that needs a user plane function network element, and the second tunnel information is used to establish a tunnel between the user plane function network element on the satellite and a PSA.

With reference to the twelfth aspect, in some implementations of the twelfth aspect, the transceiver unit is configured to send the second tunnel information to the PSA.

With reference to the twelfth aspect, in some implementations of the twelfth aspect:
The processing unit is configured to determine second tunnel information of the user plane function network element on the satellite and third tunnel information of the user plane function network element on the satellite based on the identifier of the user plane function network element on the satellite, where the service type is a non-terrestrial service in which a PSA exists, the second tunnel information is used to establish a tunnel between the user plane function network element on the satellite and a PSA, and the third tunnel information is used to establish a tunnel between the user plane function network element on the satellite and a peer user plane function network element.

With reference to the twelfth aspect, in some implementations of the twelfth aspect, the transceiver unit is configured to send the second tunnel information to the PSA, and the transceiver unit is configured to send the third tunnel information to the peer user plane function network element.

With reference to the twelfth aspect, in some implementations of the twelfth aspect:
The processing unit is configured to determine third tunnel information of the user plane function network element on the satellite based on the identifier of the user plane function network element on the satellite, where the service type is a non-terrestrial service in which no PSA exists, and the third tunnel information is used to establish a tunnel between the user plane function network element on the satellite and a peer user plane function network element.

With reference to the twelfth aspect, in some implementations of the twelfth aspect, the transceiver unit is configured to send the third tunnel information to the peer user plane function network element.

With reference to the twelfth aspect, in some implementations of the twelfth aspect, the transceiver unit is configured to send first information to the access network device via the mobility management network element. The first information includes one or more of the following: tunnel information of the peer user plane function network element, tunnel information of a PSA selected by the session management network element, a packet forwarding rule, and fourth tunnel information of the user plane function network element on the satellite, where the fourth tunnel information is used to establish a tunnel between the access network device and the user plane function network element on the satellite.

According to a thirteenth aspect, wherein the thirteenth aspect and any of its implementations and options below are not claimed, a communication apparatus is provided, and includes:
a transceiver unit and a processing unit connected to the transceiver unit.

The transceiver unit is configured to receive first information from an access network device on a satellite, where the first information includes an identifier of a data network DN accessed by a terminal device and/or an identifier of a network slice accessed by the terminal device, first tunnel information of the access network device, second tunnel information of a user plane function network element on the satellite, and third tunnel information of the user plane function network element on the satellite. The first tunnel information is used to establish a tunnel between the access network device and a protocol data unit session anchor PSA, the second tunnel information is used to establish a tunnel between the user plane function network element on the satellite and the PSA, and the third tunnel information is used to establish a tunnel between the user plane function network element on the satellite and a peer user plane function network element. The processing unit is configured to determine, based on the identifier of the DN and/or the identifier of the network slice, a service type requested by the terminal device. The processing unit is configured to obtain, from the first information based on the service type, tunnel information corresponding to the service type.

With reference to the thirteenth aspect, in some implementations of the thirteenth aspect:
The processing unit is configured to obtain the first tunnel information from the first information, where the service type is a terrestrial service that needs no user plane function network element.

With reference to the thirteenth aspect, in some implementations of the thirteenth aspect, the transceiver unit is configured to send the first tunnel information to the PSA.

With reference to the thirteenth aspect, in some implementations of the thirteenth aspect:
The processing unit is configured to obtain the second tunnel information from the first information, where the service type is a terrestrial service that needs a user plane function network element.

With reference to the thirteenth aspect, in some implementations of the thirteenth aspect, the transceiver unit is configured to send the second tunnel information to the PSA.

With reference to the thirteenth aspect, in some implementations of the thirteenth aspect:
The processing unit is configured to obtain the second tunnel information and the third tunnel information from the first information, where the service type is a non-terrestrial service in which a PSA exists.

With reference to the thirteenth aspect, in some implementations of the thirteenth aspect, the transceiver unit is configured to send the second tunnel information to the PSA, and the transceiver unit is configured to send the third tunnel information to the peer user plane function network element.

With reference to the thirteenth aspect, in some implementations of the thirteenth aspect:
The processing unit is configured to obtain the third tunnel information from the first information, where the service type is a non-terrestrial service in which no PSA exists.

With reference to the thirteenth aspect, in some implementations of the thirteenth aspect, the transceiver unit is configured to send the third tunnel information to the peer user plane function network element.

With reference to the thirteenth aspect, in some implementations of the thirteenth aspect:
The transceiver unit is configured to send first indication information to the access network device and/or the user plane function network element on the satellite. The service type is a terrestrial service that needs no user plane function network element, and the first indication information indicates to delete the second tunnel information and the third tunnel information. Alternatively, the service type is a terrestrial service that needs a user plane function network element, and the first indication information indicates to delete the third tunnel information. Alternatively, the service type is a non-terrestrial service in which no PSA exists, and the first indication information indicates to delete the second tunnel information.

According to a fourteenth aspect, a communication apparatus is provided, and includes:
a transceiver unit and a processing unit connected to the transceiver unit.

The transceiver unit is configured to obtain first information. An access network device is located on a satellite, and the first information includes an identifier of a data network DN accessed by a terminal device and/or an identifier of a network slice accessed by the terminal device, first tunnel information of the access network device, second tunnel information of a user plane function network element on the satellite, and third tunnel information of the user plane function network element on the satellite. The first tunnel information is used to establish a tunnel between the access network device and a protocol data unit session anchor PSA, the second tunnel information is used to establish a tunnel between the user plane function network element on the satellite and the PSA, and the third tunnel information is used to establish a tunnel between the user plane function network element on the satellite and a peer user plane function network element. The transceiver unit is configured to send the first information to a session management network element.

With reference to the fourteenth aspect, in some implementations of the fourteenth aspect, the transceiver unit is configured to receive first indication information from the session management network element, where the first indication information indicates to delete the second tunnel information and/or the third tunnel information. The processing unit is configured to delete the second tunnel information and/or the third tunnel information based on the first indication information.

With reference to the fourteenth aspect, in some implementations of the fourteenth aspect, the transceiver unit is further configured to send the first indication information to the user plane function network element on the satellite.

According to a fifteenth not claimed aspect, a communication device is provided, including a communication interface and a processor. When the communication device runs, the processor executes a computer program or instructions stored in a memory, to enable the communication device to perform the method in any possible implementation in the first aspect to the seventh aspect. Although not specifically claimed as such, the memory may be located in the processor, or may be implemented by using a chip independent of the processor. This is not specifically limited in this application.

According to a sixteenth aspect according to the invention, the invention also provides a computer-readable storage medium, including a computer program. When the computer program is run on a computer, the computer is enabled to perform the method in any possible implementation in the first aspect to the seventh aspect.

It should be understood that the computer may be, although not claimed as such, the foregoing terminal device or network device.

According to a seventeenth not claimed aspect, a chip is provided. A processing circuit is disposed on the chip, and the processing circuit is configured to perform the method in any possible implementation in the first aspect to the seventh aspect.

According to an eighteenth not claimed aspect, a computer program product is provided. The computer program product includes a computer program (or may be referred to as code or instructions). When the computer program is run, a computer is enabled to perform the method in any possible implementation in the first aspect to the seventh aspect.

In the following description, features which in the above summary of the invention have been marked as "not claimed" or "according to the invention" are also hereinafter, when they are described and explained with reference to the drawings, to be understood as "not claimed" or "not part of the invention" or "according to the invention". Even if sometimes in the description of the embodiments below, features marked above "according to the invention" or "the invention" are referred to in connection with the words "can" or "may" or other expressions which contain the notion of them being "optional", it should be understood that indeed such features are considered essential to the invention as claimed and not optional.

### BRIEF DESCRIPTION OF DRAWINGS

FIG. 1 shows a system architecture to which an embodiment of this application is applicable;
FIG. 2 is a schematic interaction diagram of a method according to this application;
FIG. 3 is a schematic interaction diagram of a method according to this application;
FIG. 4 is a schematic interaction diagram of a method according to this application;
FIG. 5 is a schematic interaction diagram of a method according to this application;
FIG. 6 is a schematic interaction diagram of a method according to this application;
FIG. 7 is a schematic interaction diagram of a method according to this application;
FIG. 8 is a schematic interaction diagram of a method according to this application;
FIG. 9 is a schematic interaction diagram of a method according to this application;
FIG. 10 is a schematic interaction diagram of a method according to this application;
FIG. 11 is a schematic interaction diagram of a method according to this application;
FIG. 12 is a schematic interaction diagram of a method according to this application;
FIG. 13 is a schematic interaction diagram of a method according to this application;
FIG. 14 is a schematic interaction diagram of a method according to this application;
FIG. 15 is a schematic interaction diagram of a method according to this application;
FIG. 16 is a schematic interaction diagram of a method according to this application;
FIG. 17 is a schematic interaction diagram of a method according to this application;
FIG. 18 is a schematic interaction diagram of a method according to this application;
FIG. 19 is a schematic interaction diagram of a method according to this application;
FIG. 20 is a schematic interaction diagram of a method according to this application;
FIG. 21 is a schematic interaction diagram of a method according to this application;
FIG. 22 is a schematic block diagram of a communication apparatus according to this application; and
FIG. 23 is a schematic block diagram of a communication device according to this application.

### DESCRIPTION OF EMBODIMENTS

The following describes the technical solutions in embodiments of this application with reference to the accompanying drawings.

The technical solutions in embodiments of this application may be applied to various 3rd generation partnership project (3rd generation partnership project, 3GPP) communication systems, for example, a long term evolution (long term evolution, LTE) system, an LTE frequency division duplex (frequency division duplex, FDD) system, an LTE time division duplex (time division duplex, TDD) system, a 5th generation (5th Generation, 5G) system, also referred to as a new radio (new radio, NR) system, and a future 6th generation (6th Generation, 6G) system.

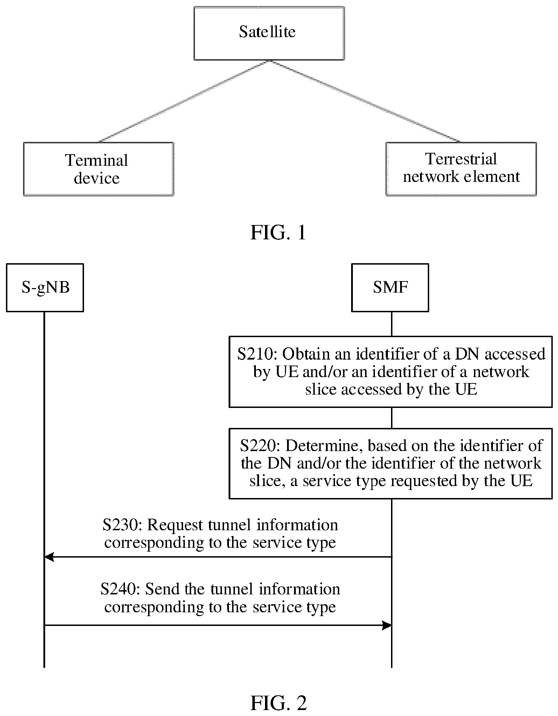

FIG. 1 shows a communication system to which an embodiment of this application is applicable. The communication system includes a terminal device, a satellite, and a terrestrial network element. The satellite includes an access network device and a user plane function network element, and the terrestrial network element includes a mobility management network element, a session management network element, and a protocol data unit session anchor (protocol data unit session anchor, PSA).

In embodiments of this application, the terminal device may be user equipment (user equipment, UE), an access terminal, a subscriber unit, a subscriber station, a mobile station, a remote station, a remote terminal, a mobile device, a user terminal, a terminal, a wireless communication device, a user agent, or a user apparatus. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device, another processing device connected to a wireless modem, an in-vehicle device, a wearable device, a terminal device in a 5G network, a terminal device in a future 6G network, a terminal device in a future evolved public land mobile network (public land mobile network, PLMN), or the like. This is not limited in embodiments of this application.

The access network device in embodiments of this application is disposed on the satellite. The access network device may be an evolved NodeB (evolved NodeB, eNB or eNodeB) in an LTE system, or may be a radio controller in a cloud radio access network (cloud radio access network, CRAN) scenario. Alternatively, the access network device may be a relay station, an access point, an in-vehicle device, a wearable device, an access network device in the 5G network, an access network device in the future 6G network, an access network device in the future evolved PLMN network, or the like. This is not limited in embodiments of this application.

The user plane function network element in embodiments of this application is responsible for processing a user packet, for example, forwarding and charging. For example, in the 5G network, the user plane function network element may be a user plane function (user plane function, UPF) network element. It should be understood that, in a future communication system, the user plane function network element may still be the UPF network element or have another name. This is not limited in this application.

The mobility management network element in embodiments of this application is responsible for mobility management in a mobile network, for example, user location update, registration of a user with a network, and user switching. For example, in the 5G network, the mobility management network element may be an access and mobility management function (access and mobility management function, AMF) network element. It should be understood that, in the future communication system, the mobility management network element may still be the AMF network element or have another name. This is not limited in this application.

The session management network element in embodiments of this application is responsible for session management in the mobile network, for example, session creation, modification, and deletion. For example, in the 5G network, the session management network element may be a session management function (session management function, SMF) network element. It should be understood that, in the future communication system, the session management network element may still be the SMF network element or have another name. This is not limited in this application.

The method in this application is used to reduce a latency of a user plane connection. Establishment of the user plane connection includes a session establishment procedure and a service request procedure. The following describes the method in this application in detail by using the session establishment procedure as an example.

In addition, the method in this application is not only applicable to a scenario in which the access network device and the user plane function network element are disposed on the satellite, but also applicable to a scenario in which the access network device and the user plane function network element are bound together and disposed on another apparatus.

For ease of description, the following describes the method in this application in detail by using an example in which the access network device and the user plane function network element are disposed on the satellite, the terminal device is UE, the access network device on the satellite is an S-gNB, the user plane function network element on the satellite is an S-UPF, the mobility management network element is an AMF, and the session management network element is an SMF.

FIG. 2 shows a method according to this application. The method includes the following steps.

S210: An SMF obtains an identifier of a data network (data network, DN) accessed by UE and/or an identifier of a network slice accessed by the UE.

For example, the identifier of the DN may be a data network name (data network name, DNN), and the identifier of the network slice may be single network slice selection assistance information (single network slice selection assistance information, S-NSSAI).

S220: The SMF determines, based on the identifier of the DN and/or the identifier of the network slice, a service type requested by the UE.

The service type requested by the UE may be any one of the following:
a terrestrial service that needs no user plane function network element, a terrestrial service that needs a user plane function network element, a non-terrestrial service in which a protocol data unit session anchor (protocol data unit session anchor, PSA) exists, and a non-terrestrial service in which no PSA exists.

For example, the SMF may determine the service type accessed by the UE, based on the identifier of the DN accessed by the UE and/or the identifier of the network slice accessed by the UE, and one or more of the following:
subscription information of the UE, local configuration information, and a policy.

For example, the UE accesses a DN #1, the subscription information of the UE is that the UE is allowed to access the DN #1, and the local configuration information or policy is that the DN #1 corresponds to a service type #1. In this case, the service type accessed by the UE is the service type #1.

For another example, the UE accesses a network slice #1, the subscription information of the UE is that the UE is allowed to access the network slice #1, and the local configuration information or policy is that the network slice #1 corresponds to a service type #1. In this case, the service type accessed by the UE is the service type #1.

S230: The SMF requests, from an S-gNB, tunnel information corresponding to the service type.

S240: The S-gNB sends, to the SMF, the tunnel information corresponding to the service type. Correspondingly, the SMF receives, from the S-gNB, the tunnel information corresponding to the service type.

According to the method in this application, the SMF determines, based on the identifier of the DN accessed by the UE and/or the identifier of the network slice accessed by the UE, the service type requested by the UE, and further requests, from the S-gNB, the tunnel information corresponding to the service type. This can reduce a quantity of interactions between a satellite and a terrestrial network element, so that a process of establishing a user plane connection is simplified, a latency of establishing the user plane connection is reduced, and user experience is improved.

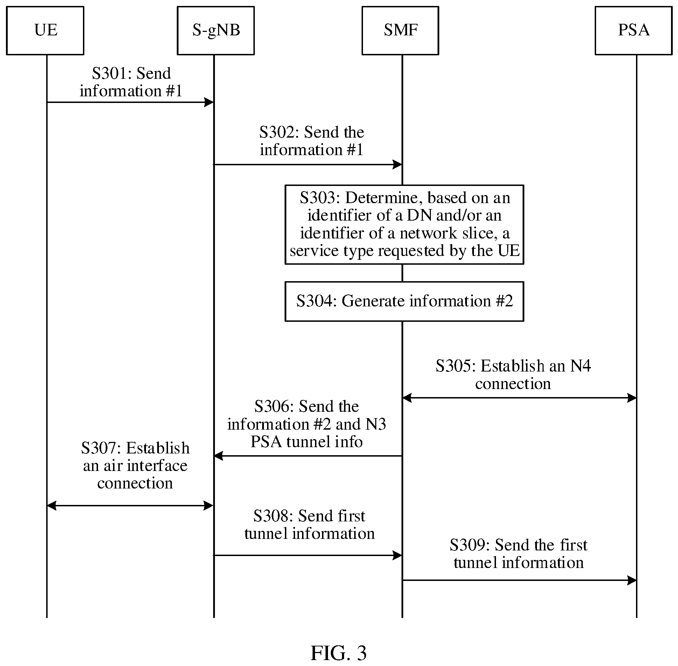

For different service types, the following describes the method in FIG. 2 in detail with reference to FIG. 3 to FIG. 6.

FIG. 3 shows a method according to this application. The method corresponds to that the service type requested by the UE is the terrestrial service that needs no user plane function network element.

S301: The UE sends the identifier of the DN accessed by the UE and/or the identifier of the network slice accessed by the UE to the S-gNB. Correspondingly, the S-gNB receives the identifier of the DN accessed by the UE and/or the identifier of the network slice accessed by the UE.

For ease of description, information #1 is used below to represent the identifier of the DN accessed by the UE and/or the identifier of the network slice accessed by the UE. In other words, the information #1 includes at least one of the identifier of the DN accessed by the UE and the identifier of the network slice accessed by the UE.

For example, the UE may send an access network (access network, AN) message (message) to the S-gNB, where the AN message includes the information #1. In addition, the AN message further includes a PDU session identifier (PDU session ID) and a session establishment request message.

S302: The S-gNB sends the information #1 to the SMF. Correspondingly, the SMF receives the information #1.

In a manner, the S-gNB may send the information #1 to the SMF via an AMF.

For example, the S-gNB may send an N2 message (N2 message) to the AMF, where the N2 message includes the information #1. In addition, the N2 message further includes the PDU session ID and the session establishment request message.

The AMF may send a create session management context request (Nsmf_PDUSession_CreateSMContext Request) message to the SMF, where the create session management context request message includes the information #1. In addition, the create session management context request message further includes the PDU session ID and the session establishment request message.

S303: The SMF determines, based on the identifier of the DN accessed by the UE and/or the identifier of the network slice accessed by the UE, that the service type accessed by the UE is the terrestrial service that needs no user plane function network element.

For example, the SMF may determine that the service type accessed by the UE is the terrestrial service that needs no user plane function network element, based on the identifier of the DN accessed by the UE and/or the identifier of the network slice accessed by the UE, and one or more of the following:
the subscription information of the UE, the local configuration information, and the policy.

S304: The SMF generates information #2, where the information #2 is used to request first tunnel information of the S-gNB, and the first tunnel information is used to establish a tunnel between the S-gNB and a PSA.

The first tunnel information may also be referred to as N3 interface access network tunnel information (N3 S-gNB tunnel info). For the first tunnel information, details are not described below. It should be understood that the first tunnel information and the N3 S-gNB tunnel info in this embodiment of this application may be interchanged.

S305: The SMF selects a PSA (denoted as a PSA #1), and establishes an N4 connection to the PSA #1.

A process in which the SMF establishes the N4 connection to the PSA #1 includes the following steps:
Step 1: The SMF sends a request message #1 to the PSA #1, where the request message #1 is used to request to establish the N4 connection.

Step 2: The PSA #1 sends a response message #1 to the SMF, where the response message #1 includes tunnel information of the PSA #1 (N3 PSA tunnel info).

S306: The SMF sends the information #2 and the N3 PSA tunnel info to the S-gNB. Correspondingly, the S-gNB receives the information #2 and the N3 PSA tunnel info.

In a manner, the SMF sends the information #2 and the N3 PSA tunnel info to the S-gNB via the AMF.

For example, the SMF may send an N1N2 message transfer message (Namf_Communication_N1N2MessageTransfer message) to the AMF, where the N1N2 message transfer message includes the information #2 and the N3 PSA tunnel info. In addition, the N1N2 message transfer message further includes the PDU session ID and a session establishment receive message. The information #2 may be carried in N2 SM info, and the session establishment receive message may be carried in N1 SM container.

For example, the AMF sends an N2 session request message (N2 PDU session request message) to the S-gNB, where the N2 session request message includes the information #2 and the N3 PSA tunnel info. In addition, the N2 session request message further includes the PDU session ID and the session establishment receive message.

S307: The S-gNB establishes an air interface connection to the UE.

In this process, the S-gNB may send air interface configuration information and a session establishment accept message of the UE to the UE.

S308: The S-gNB sends the first tunnel information to the SMF based on the information #2. Correspondingly, the SMF receives the first tunnel information.

In a manner, the S-gNB may send the first tunnel information to the SMF via the AMF.

For example, the S-gNB may send an N2 PDU session ACK message to the AMF, where the N2 PDU session ACK message includes the first tunnel information. Further, the AMF sends the first tunnel information to the SMF.

S309: The SMF sends the first tunnel information to the PSA #1. Correspondingly, the PSA #1 receives the first tunnel information.

For example, the SMF may initiate an N4 modification process with the PSA #1, and send the first tunnel information to the PSA #1 in this process.

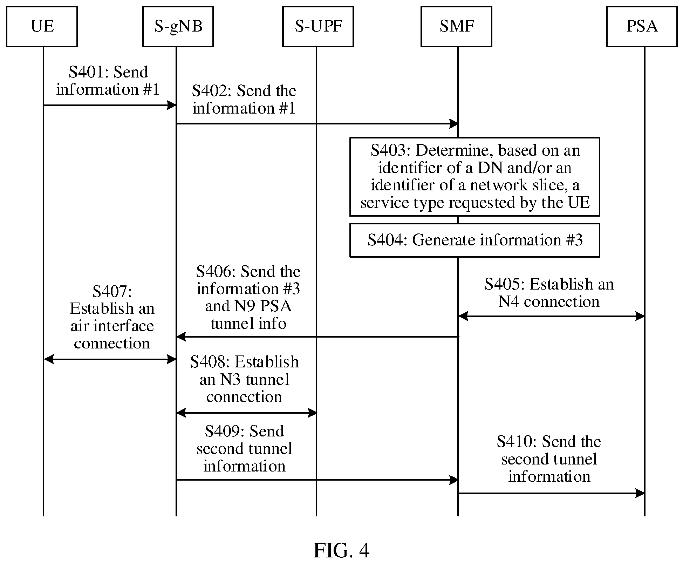

FIG. 4 shows a method according to this application. The method corresponds to that the service type requested by the UE is the terrestrial service that needs a user plane function network element.

S401: The UE sends the identifier of the DN accessed by the UE and/or the identifier of the network slice accessed by the UE to the S-gNB. Correspondingly, the S-gNB receives the identifier of the DN accessed by the UE and/or the identifier of the network slice accessed by the UE.

Similarly, for ease of description, information #1 is used below to represent the identifier of the DN accessed by the UE and/or the identifier of the network slice accessed by the UE.

This process is the same as S301. Details are not described again.

S402: The S-gNB sends the information #1 to the SMF. Correspondingly, the SMF receives the information #1.

This process is the same as S302. Details are not described again.

S403: The SMF determines, based on the identifier of the DN accessed by the UE and/or the identifier of the network slice accessed by the UE, that the service type accessed by the UE is the terrestrial service that needs a user plane function network element.

For example, the SMF may determine that the service type accessed by the UE is the terrestrial service that needs a user plane function network element, based on the identifier of the DN accessed by the UE and/or the identifier of the network slice accessed by the UE, and one or more of the following:
the subscription information of the UE, the local configuration information, and the policy.

For this process, refer to the descriptions of S303.

S404: The SMF generates information #3, where the information #3 is used to request second tunnel information of an S-UPF, and the second tunnel information is used to establish a tunnel between the S-UPF and a PSA.

The second tunnel information may also be referred to as N9 interface user plane tunnel information (N9 S-UPF tunnel info). For the second tunnel information, details are not described below. It should be understood that the second tunnel information and the N9 S-UPF tunnel info in this embodiment of this application may be interchanged.

S405: The SMF selects a PSA (denoted as a PSA #1), and establishes an N4 connection to the PSA #1.

A process in which the SMF establishes the N4 connection to the PSA #1 includes the following steps.

Step 1: The SMF sends a request message #1 to the PSA #1, where the request message #1 is used to request to establish the N4 connection.

Step 2: The PSA #1 sends a response message #1 to the SMF, where the response message #1 includes tunnel information of the PSA #1 (N9 PSA tunnel info).

S406: The SMF sends the information #3 and the N9 PSA tunnel info to the S-gNB. Correspondingly, the S-gNB receives the information #3 and the N9 PSA tunnel info.

For a manner in which the SMF sends the information #3 and the N9 PSA tunnel info to the S-gNB, refer to S306.

S407: The S-gNB establishes an air interface connection to the UE.

In this process, the S-gNB may send air interface configuration information and a session establishment accept message of the UE to the UE.

S408: The S-gNB establishes an N3 tunnel connection to the S-UPF.

This process includes the following steps.

Step 1: The S-gNB sends a request message #2 to the S-UPF, where the request message #2 is used to request to establish the N3 tunnel connection, and the request message #1 includes N3 S-gNB tunnel info and the N9 PSA tunnel info.

Step 2: The UPF sends a response message #2 to the S-gNB, where the response message #2 includes N3 S-UPF tunnel info, the N9 S-UPF tunnel info, and Nx S-UPF tunnel info.

It may be understood that an execution sequence of step S407 and step S408 is not limited in this application.

S409: The S-gNB sends the second tunnel information to the SMF based on the information #3. Correspondingly, the SMF receives the second tunnel information.

In a manner, the S-gNB may send the second tunnel information to the SMF via an AMF. For this process, refer to the descriptions of S308.

S410: The SMF sends the second tunnel information to the PSA #1. Correspondingly, the PSA #1 receives the second tunnel information.

For example, the SMF may initiate an N4 modification process with the PSA #1, and send the second tunnel information to the PSA #1 in this process.

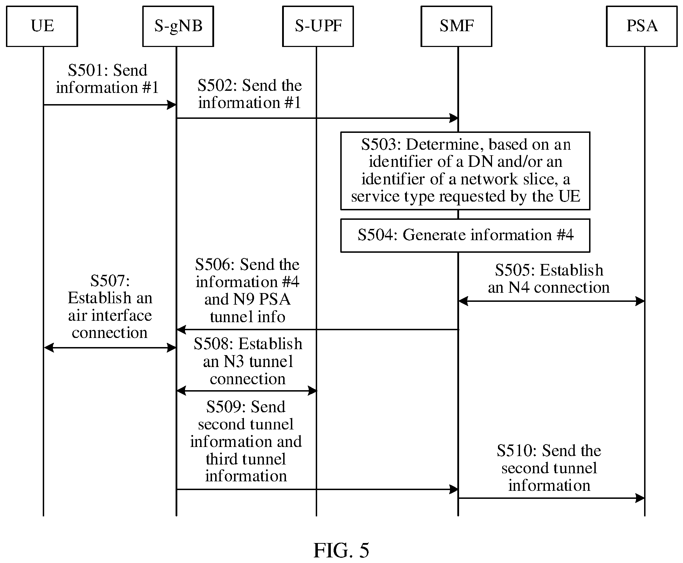

FIG. 5 shows a method according to this application. The method corresponds to that the service type requested by the UE is the non-terrestrial service in which a PSA exists.

S501: The UE sends the identifier of the DN accessed by the UE and/or the identifier of the network slice accessed by the UE to the S-gNB. Correspondingly, the S-gNB receives the identifier of the DN accessed by the UE and/or the identifier of the network slice accessed by the UE.

Similarly, for ease of description, information #1 is used below to represent the identifier of the DN accessed by the UE and/or the identifier of the network slice accessed by the UE.

This process is the same as S301. Details are not described again.

S502: The S-gNB sends the information #1 to the SMF. Correspondingly, the SMF receives the information #1.

This process is the same as S302. Details are not described again.

S503: The SMF determines, based on the identifier of the DN accessed by the UE and/or the identifier of the network slice accessed by the UE, that the service type accessed by the UE is the non-terrestrial service in which a PSA exists.

For example, the SMF may determine that the service type accessed by the UE is the non-terrestrial service in which a PSA exists, based on the identifier of the DN accessed by the UE and/or the identifier of the network slice accessed by the UE, and one or more of the following:
the subscription information of the UE, the local configuration information, and the policy.

For this process, refer to the descriptions of S303.

S504: The SMF generates information #4, where the information #4 is used to request second tunnel information and third tunnel information of an S-UPF, and the third tunnel information is used to establish a tunnel between the S-UPF and a peer UPF.

The third tunnel information may also be referred to as Nx interface user plane tunnel information (Nx S-UPF tunnel info) or N19 interface user plane tunnel information (N19 S-UPF tunnel info). For the third tunnel information, details are not described below. It should be understood that the third tunnel information and the Nx S-UPF tunnel info in this embodiment of this application may be interchanged.

S505: The SMF selects a PSA (denoted as a PSA #1), and establishes an N4 connection to the PSA #1.

A process in which the SMF establishes the N4 connection to the PSA #1 includes the following steps.

Step 1: The SMF sends a request message #1 to the PSA #1, where the request message #1 is used to request to establish the N4 connection.

Step 2: The PSA #1 sends a response message #1 to the SMF, where the response message #1 includes tunnel information of the PSA #1 (N9 PSA tunnel info).

S506: The SMF sends the information #4 and the N9 PSA tunnel info to the S-gNB. Correspondingly, the S-gNB receives the information #4 and the N9 PSA tunnel info.

For a manner in which the SMF sends the information #4 and the N9 PSA tunnel info to the S-gNB, refer to the descriptions in S306.

S507: The S-gNB establishes an air interface connection to the UE.

In this process, the S-gNB may send air interface configuration information and a session establishment accept message of the UE to the UE.

S508: The S-gNB establishes an N3 tunnel connection to the S-UPF.

For this process, refer to S408. In other words, the S-gNB may obtain the second tunnel information and the third tunnel information in the process of establishing the N3 tunnel connection to the S-UPF.

It may be understood that an execution sequence of step S507 and step S508 is not limited in this application.

S509: The S-gNB sends the second tunnel information and the third tunnel information to the SMF based on the information #4. Correspondingly, the SMF receives the second tunnel information and the third tunnel information.

S510: The SMF sends the second tunnel information to the PSA. Correspondingly, the PSA receives the second tunnel information.

In addition, the SMF stores the third tunnel information. In a case, the S-UPF needs to communicate with the peer UPF. In this case, the SMF may send the third tunnel information to the peer UPF. In addition, the SMF may obtain tunnel information of the peer UPF, and send the tunnel information of the peer UPF to the S-UPF.

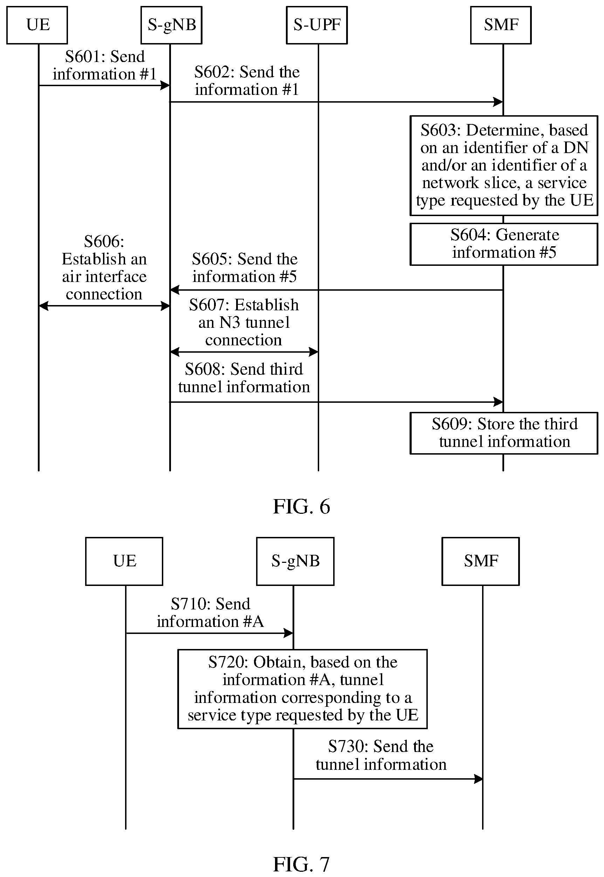

FIG. 6 shows a method according to this application. The method corresponds to that the service type requested by the UE is the non-terrestrial service in which no PSA exists.

S601: The UE sends the identifier of the DN accessed by the UE and/or the identifier of the network slice accessed by the UE to the S-gNB. Correspondingly, the S-gNB receives the identifier of the DN accessed by the UE and/or the identifier of the network slice accessed by the UE.

Similarly, for ease of description, information #1 is used below to represent the identifier of the DN accessed by the UE and/or the identifier of the network slice accessed by the UE.

This process is the same as S301. Details are not described again.

S602: The S-gNB sends the information #1 to the SMF. Correspondingly, the SMF receives the information #1.

This process is the same as S302. Details are not described again.

S603: The SMF determines, based on the identifier of the DN accessed by the UE and/or the identifier of the network slice accessed by the UE, that the service type accessed by the UE is the non-terrestrial service in which no PSA exists.

For example, the SMF may determine that the service type accessed by the UE is the non-terrestrial service in which no PSA exists, based on the identifier of the DN accessed by the UE and/or the identifier of the network slice accessed by the UE, and one or more of the following:
the subscription information of the UE, the local configuration information, and the policy.

For this process, refer to the descriptions of S303.

S604: The SMF generates information #5, where the information #5 is used to request third tunnel information.

S605: The SMF sends the information #5 to the S-gNB. Correspondingly, the S-gNB receives the information #5.

For a manner in which the SMF sends the information #5 to the S-gNB, refer to S306.

S606: The S-gNB establishes an air interface connection to the UE.

In this process, the S-gNB may send air interface configuration information and a session establishment accept message of the UE to the UE.

S607: The S-gNB establishes an N3 tunnel connection to an S-UPF.

For this process, refer to S408. In other words, the S-gNB may obtain the third tunnel information in the process of establishing the N3 tunnel connection to the S-UPF.

It may be understood that an execution sequence of step S606 and step S607 is not limited in this application.

S608: The S-gNB sends the third tunnel information to the SMF based on the information #5. Correspondingly, the SMF receives the third tunnel information.

In a manner, the S-gNB may send the third tunnel information to the SMF via an AMF. For this process, refer to the descriptions of S308.

S609: The SMF stores the third tunnel information.

In a case, the S-UPF needs to communicate with a peer UPF. In this case, the SMF may send the third tunnel information to the peer UPF. In addition, the SMF may obtain tunnel information of the peer UPF, and send the tunnel information of the peer UPF to the S-UPF.

FIG. 7 shows a method according to this application. The method includes the following steps.

S710: UE sends information #A to an S-gNB. Correspondingly, the S-gNB receives the information #A.

The information #A indicates a service type requested by the UE.

For example, the UE may send an AN message to the S-gNB, where the AN message includes the information #A. In addition, the AN message further includes at least one of an identifier of a DN accessed by the UE and an identifier of a network slice accessed by the UE, a PDU session ID, and a session establishment request message.

Optionally, the service type requested by the UE may be indicated by using the identifier of the DN accessed by the UE and/or the identifier of the network slice accessed by the UE. In other words, in this case, the UE does not need to additionally send the information #A to the S-gNB.

S720: The S-gNB obtains, based on the information #A, tunnel information corresponding to the service type requested by the UE.

S730: The S-gNB sends the tunnel information to an SMF. Correspondingly, the SMF receives the tunnel information.

It should be understood that the SMF receives and stores the tunnel information. The tunnel information is used to establish a user plane connection corresponding to the service type requested by the UE.

In a manner, the S-gNB may send the tunnel information to the SMF via an AMF.

For example, the S-gNB may send an N2 message to the AMF, where the N2 message includes the tunnel information. In addition, the N2 message may further include at least one of the identifier of the DN accessed by the UE and the identifier of the network slice accessed by the UE, the PDU session ID, and the session establishment request message.

For example, the AMF may send an Nsmf_PDUSession_CreateSMContext Request message to the SMF, where the Nsmf_PDUSession_CreateSMContext Request message includes the tunnel information. In addition, the Nsmf_PDUSession_CreateSMContext Request message may further include at least one of the identifier of the DN accessed by the UE and the identifier of the network slice accessed by the UE, the PDU session ID, the session establishment request message, a subscription permanent identifier (subscription permanent identifier, SUPI), and an AMF identifier (AMF ID).

According to the method in this application, in a process of establishing the user plane connection, the S-gNB obtains, based on the service type requested by the UE, the tunnel information corresponding to the service type, and sends, to the SMF, the tunnel information corresponding to the service type. Therefore, according to the method in this application, a quantity of interactions between a satellite and a terrestrial network element can be reduced, so that the process of establishing the user plane connection is simplified, a latency of establishing the user plane connection is reduced, and user experience is improved.

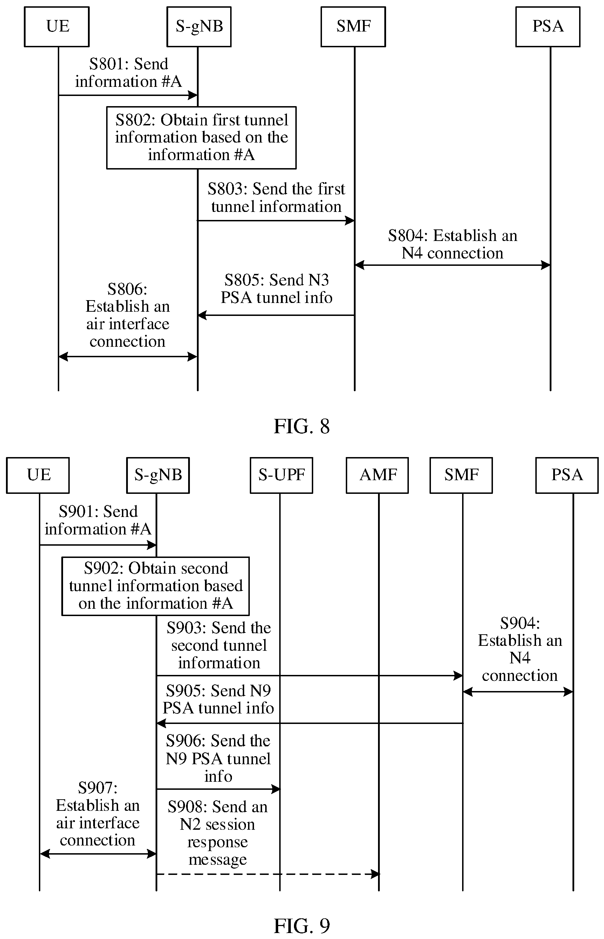

For different service types, the following describes the method in FIG. 7 in detail with reference to FIG. 8 to FIG. 11.

FIG. 8 shows a method according to this application. The method corresponds to that the service type requested by the UE is a terrestrial service that needs no user plane function network element.

S801: The UE sends the information #A to the S-gNB. Correspondingly, the S-gNB receives the information #A.

The information #A indicates that the service type requested by the UE is the terrestrial service that needs no user plane function network element.

For this process, refer to S710.

S802: The S-gNB obtains first tunnel information of the S-gNB (N3 S-gNB tunnel info) based on the information #A.

In a manner, the S-gNB may obtain the N3 S-gNB tunnel info locally.

S803: The S-gNB sends the first tunnel information to the SMF. Correspondingly, the SMF receives the first tunnel information.

In a manner, the S-gNB may send the first tunnel information to the SMF via the AMF. For details, refer to S730.

S804: The SMF selects a terrestrial PSA (denoted as a PSA #1), and establishes an N4 connection to the PSA #1.

A process in which the SMF establishes the N4 connection to the PSA #1 includes the following steps.

Step 1: The SMF sends a request message #1 to the PSA #1, where the request message #1 is used to request to establish the N4 connection. The request message #1 includes the N3 S-gNB tunnel info.

Step 2: The PSA #1 sends a response message #1 to the SMF, where the response message #1 includes tunnel information of the PSA #1 (N3 PSA tunnel info).

S805: The SMF sends the N3 PSA tunnel info to the S-gNB. Correspondingly, the S-gNB receives the N3 PSA tunnel info.

In a manner, the SMF may send the N3 PSA tunnel info to the S-gNB via the AMF.

For example, the SMF may send an Namf_Communication_N1N2MessageTransfer message to the AMF, where the Namf_Communication_N1N2MessageTransfer message includes the N3 PSA tunnel info. In addition, the Namf_Communication_N1N2MessageTransfer message further includes the PDU session ID and a session establishment accept message.

For example, the AMF sends an N2 PDU session request message to the S-gNB, where the N2 PDU session request message includes the N3 PSA tunnel info. In addition, the N2 PDU session request message further includes the PDU session ID and the session establishment accept message.

S806: The S-gNB establishes an air interface connection to the UE.

In this process, the S-gNB may send air interface configuration information and the session establishment accept message to the UE.

FIG. 9 shows a method according to this application. The method corresponds to that the service type requested by the UE is a terrestrial service that needs a user plane function network element.

S901: The UE sends the information #A to the S-gNB. Correspondingly, the S-gNB receives the information #A.

The information #A indicates that the service type requested by the UE is the terrestrial service that needs a user plane function network element.

For this process, refer to S710.

S902: The S-gNB obtains second tunnel information of an S-UPF (N9 S-UPF tunnel info) based on the information #A.

The following describes manners in which the S-gNB obtains the N9 S-UPF tunnel info.

### Manner 1:

An N3 tunnel connection has been established between the S-gNB and the S-UPF. In this case, the S-gNB obtains the N9 S-UPF tunnel info locally.

### Manner 2:

No N3 tunnel connection has been established between the S-gNB and the S-UPF. In this case, the S-gNB obtains the N9 S-UPF tunnel info from the S-UPF. The establishment of the N3 tunnel connection between the S-gNB and the S-UPF includes the following steps.

Step 1: The S-gNB sends a request message #2 to the S-UPF, where the request message #2 is used to request to establish the N3 tunnel connection, and a request message #1 includes N3 S-gNB tunnel info.

Step 2: The S-UPF sends a response message #2 to the S-gNB, where the response message #2 includes N3 S-UPF tunnel info, the N9 S-UPF tunnel info, and Nx S-UPF tunnel info.

The S-gNB obtains the N9 S-UPF tunnel info from the response message #2.

It should be noted that, in Manner 2, that no N3 tunnel connection has been established between the S-gNB and the S-UPF may be further described as follows: The S-gNB determines, based on the PDU session ID in the AN message, whether tunnel information corresponding to the session identifier is stored. If the tunnel information corresponding to the session identifier is stored, it may be determined that the N3 tunnel connection corresponding to the session has been established between the S-gNB and the S-UPF. If the tunnel information corresponding to the session identifier is not stored, it may be determined that the N3 tunnel connection corresponding to the session is not established between the S-gNB and the S-UPF.

S903: The S-gNB sends the second tunnel information to the SMF. Correspondingly, the SMF receives the second tunnel information.

In a manner, the S-gNB may send the second tunnel information to the SMF via the AMF. For details, refer to S730.

S904: The SMF selects a terrestrial PSA (denoted as a PSA #1), and establishes an N4 connection to the PSA #1.

A process in which the SMF establishes the N4 connection to the PSA #1 includes the following steps.

Step 1: The SMF sends a request message #1 to the PSA #1, where the request message #1 is used to request to establish the N4 connection. The request message #1 includes the N9 S-UPF tunnel info.

Step 2: The PSA #1 sends a response message #1 to the SMF, where the response message #1 includes tunnel information of the PSA #1 (N9 PSA tunnel info).

S905: The SMF sends the N9 PSA tunnel info to the S-gNB. Correspondingly, the S-gNB receives the N9 PSA tunnel info.

Optionally, the SMF further sends rule information to the S-gNB, where the rule information indicates the S-UPF how to process a packet. For example, the rule information may include one or more of a packet detection rule, a packet forwarding rule, and a packet reporting rule. For the rule information, details are not described below.

In a manner, the SMF may send the N9 PSA tunnel info and the rule information to the S-gNB via the AMF. For details, refer to S805.

In addition, the SMF may alternatively send the N9 PSA tunnel info to the S-gNB in the following manner:

The SMF sends an N4 session establishment/modification request message to the S-UPF. The N9 PSA tunnel info and the rule information may be included in N2 SM info of the N4 session establishment/modification request message. Optionally, an N4 session establishment/modification request further includes the PDU session ID and a session establishment accept message. Further, the S-UPF sends the N9 PSA tunnel info to the S-gNB. Optionally, the S-UPF further sends the PDU session ID and the session establishment accept message to the S-gNB.

S906: The S-gNB sends the N9 PSA tunnel info to the S-UPF. Correspondingly, the S-UPF receives the N9 PSA tunnel info.

Optionally, the S-gNB further sends the rule information to the S-UPF.

S907: The S-gNB establishes an air interface connection to the UE.

In this process, the S-gNB may send air interface configuration information and the session establishment accept message to the UE.

Optionally, in S908, the S-gNB sends an N2 session response (N2 PDU session response) message to the AMF. Correspondingly, the AMF receives the N2 session response message.

The N2 session response message does not include the first tunnel information.

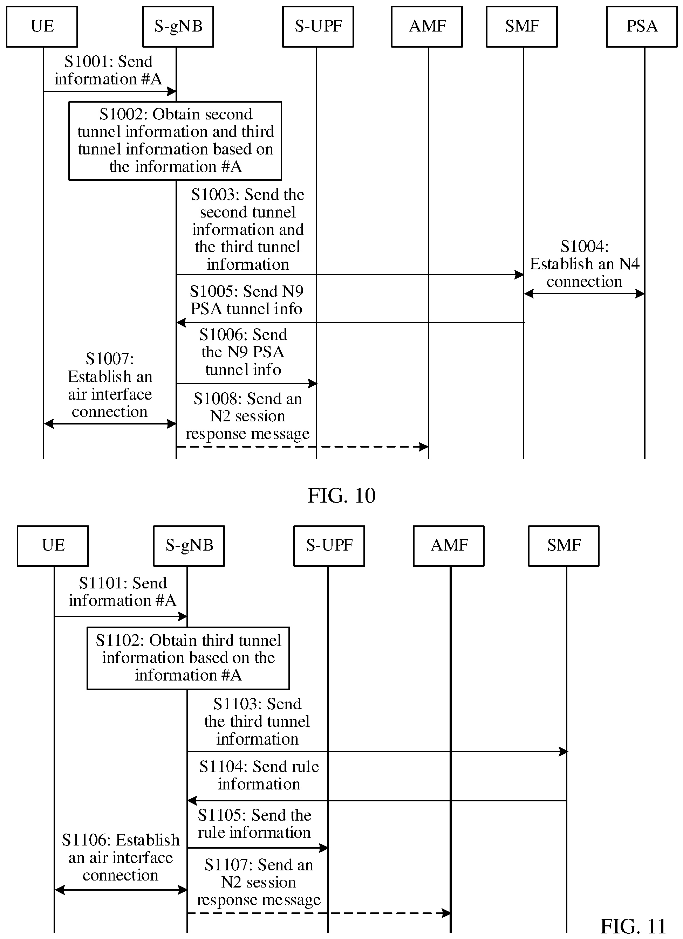

FIG. 10 shows a method according to this application. The method corresponds to that the service type requested by the UE is a non-terrestrial service in which a PSA exists.

S1001: The UE sends the information #A to the S-gNB. Correspondingly, the S-gNB receives the information #A.

The information #A indicates that the service type requested by the UE is the non-terrestrial service in which a PSA exists.

For this process, refer to S710.

S1002: The S-gNB obtains second tunnel information of an S-UPF (N9 S-UPF tunnel info) and third tunnel information of the S-UPF (Nx S-UPF tunnel info) based on the information #A.

For a manner in which the S-gNB obtains the N9 S-UPF tunnel info and the Nx S-UPF tunnel info, refer to S902.

S1003: The S-gNB sends the second tunnel information and the third tunnel information to the SMF. Correspondingly, the SMF receives the second tunnel information and the third tunnel information.

In a manner, the S-gNB may send the second tunnel information and the third tunnel information to the SMF via the AMF. For details, refer to S730.

S1004: The SMF selects a terrestrial PSA (denoted as a PSA #1), and establishes an N4 connection to the PSA #1.

This process is the same as S904. For details, refer to the descriptions of S904. In other words, the SMF sends the N9 S-UPF tunnel info to the PSA #1 in the process of establishing the N4 connection to the PSA #1, and obtains N9 PSA tunnel info from the PSA #1.

In addition, in a case, the SMF may send the third tunnel information to a peer UPF, and obtain tunnel information of the peer UPF.

S1005: The SMF sends the N9 PSA tunnel info to the S-gNB. Correspondingly, the S-gNB receives the N9 PSA tunnel info.

Optionally, the SMF further sends at least one of rule information and the tunnel information that is of the peer UPF to the S-gNB.

For a specific sending manner, refer to S905. Details are not described herein again.

S1006: The S-gNB sends the N9 PSA tunnel info to the S-UPF. Correspondingly, the S-UPF receives the N9 PSA tunnel info.

Optionally, the S-gNB further sends at least one of the rule information and the tunnel information that is of the peer UPF to the S-UPF.

It can be learned from S1005 and S1006 that the SMF sends the foregoing information to the S-UPF via the S-gNB. In another manner, the SMF may directly send the foregoing information to the S-UPF.

S1007: The S-gNB establishes an air interface connection to the UE.

In this process, the S-gNB may send air interface configuration information and a session establishment accept message to the UE.

Optionally, in S1008, the S-gNB sends an N2 session response message to the AMF. Correspondingly, the AMF receives the N2 session response message.

The N2 session response message does not include first tunnel information.

FIG. 11 shows a method according to this application. The method corresponds to that the service type requested by the UE is a non-terrestrial service in which no PSA exists.

S1101: The UE sends the information #A to the S-gNB. Correspondingly, the S-gNB receives the information #A.

The information #A indicates that the service type requested by the UE is the non-terrestrial service in which no PSA exists.

For this process, refer to S710.

S1102: The S-gNB obtains third tunnel information of an S-UPF (Nx S-UPF tunnel info) based on the information #A

For a manner in which the S-gNB obtains the Nx S-UPF tunnel info, refer to S902.

S1103: The S-gNB sends the third tunnel information to the SMF. Correspondingly, the SMF receives the third tunnel information.

In a manner, the S-gNB may send the third tunnel information to the SMF via the AMF. For details, refer to S730. It should be understood that the SMF receives and stores the third tunnel information.

In a case, the SMF may send the third tunnel information to a peer UPF, and obtain tunnel information of the peer UPF.

S1104: The SMF sends rule information to the S-gNB. Correspondingly, the S-gNB receives the rule information.

Optionally, the SMF further sends the tunnel information of the peer UPF to the S-gNB.

For a specific sending manner, refer to S905. Details are not described herein again.

S1105: The S-gNB sends the rule information to the S-UPF. Correspondingly, the S-UPF receives the rule information.

Optionally, the S-gNB further sends the tunnel information of the peer UPF to the S-UPF.

It can be learned from S1104 and S1105 that the SMF sends the foregoing information to the S-UPF via the S-gNB. In another manner, the SMF may directly send the foregoing information to the S-UPF.

S1106: The S-gNB establishes an air interface connection to the UE.

In this process, the S-gNB may send air interface configuration information and a session establishment accept message to the UE.

Optionally, in S1107, the S-gNB sends an N2 session response message to the AMF. Correspondingly, the AMF receives the N2 session response message.

The N2 session response message does not include first tunnel information.

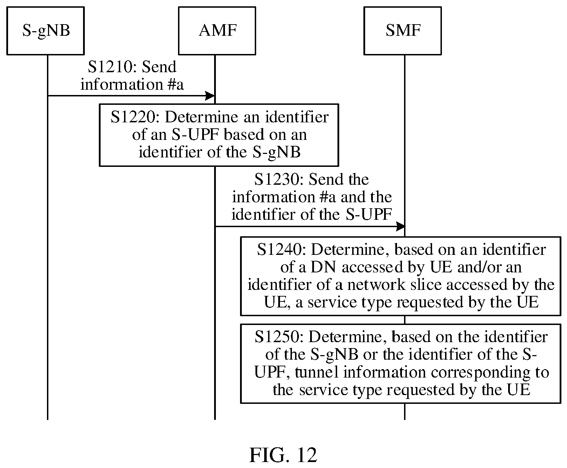

FIG. 12 shows a method according to this application. The method includes the following steps.

S 1210: An S-gNB sends information #a to an AMF. Correspondingly, the AMF receives the information #a.

The information #a includes an identifier of the S-gNB, an identifier of a DN accessed by UE, and/or an identifier of a network slice accessed by the UE. For example, the identifier of the S-gNB may be an address of the S-gNB.

Optionally, the information #a further includes an identifier of an S-UPF. In a manner, the identifier of the S-UPF may be an address of the S-UPF.

In a manner, the S-gNB may send the information #a to the AMF by using an N2 message, where the N2 message further includes a satellite access type of the UE, a session establishment request message of the UE, and a PDU session ID.

S1220: The AMF determines the identifier of the S-UPF based on the identifier of the S-gNB.

Specifically, the AMF may determine the identifier of the S-UPF based on the identifier of the S-gNB and a correspondence between the S-gNB and the S-UPF.

It should be understood that, if the information #a already includes the identifier of the S-UPF, S1220 may not be performed.

S1230: The AMF sends the information #a and the identifier of the S-UPF to an SMF. Correspondingly, the SMF receives the information #a and the identifier of the S-UPF.

It should be understood that, in S1230, the information #a sent by the AMF to the SMF does not include the identifier of the S-UPF. In other words, the identifier of the S-UPF sent by the AMF to the SMF is determined in S1220.

In a manner, the AMF may send an Nsmf_PDUSession_CreateSMContext Request message to the SMF, where the Nsmf_PDUSession_CreateSMContext Request message includes the information #a and the identifier of the S-UPF. In addition, the Nsmf_PDUSession_CreateSMContext Request message further includes the session establishment request message, an SUPI, the PDU session ID, and an AMF ID.

S1240: The SMF determines, based on the identifier of the DN accessed by the UE and/or the identifier of the network slice accessed by the UE, a service type requested by the UE.

In a manner, the SMF may determine the service type requested by the UE, based on the identifier of the DN accessed by the UE and/or the identifier of the network slice accessed by the UE, and one or more of the following:
subscription information of the UE and local configuration information.

S1250: The SMF determines, based on the identifier of the S-gNB or the identifier of the S-UPF, tunnel information corresponding to the service type requested by the UE.

For example, the SMF may obtain a tunnel address range corresponding to the S-gNB and a tunnel address range corresponding to the S-UPF. Further, the SMF determines, based on the tunnel address range corresponding to the S-gNB or the tunnel address range corresponding to the S-UPF, the tunnel information corresponding to the service type requested by the UE.

It should be understood that the tunnel address range corresponding to the S-gNB may be preconfigured in the SMF, or may be obtained by the SMF from the S-gNB. The tunnel address range corresponding to the S-UPF may be preconfigured in the SMF, or may be obtained by the SMF from the S-UPF.

For example, the tunnel address range corresponding to the S-gNB is (A, B, C, D, E), and the tunnel addresses A, B, C, and D have been allocated (used). In this case, the SMF determines that the tunnel information corresponding to the service type requested by the UE is the tunnel address E.

According to the method in this application, the SMF determines, based on the identifier of the S-gNB or the identifier of the S-UPF, the tunnel information corresponding to the service type requested by the UE. Therefore, according to the method in this application a quantity of interactions between a satellite and a terrestrial network element can be reduced, so that a process of establishing a user plane connection is simplified, and a latency of establishing the user plane connection is reduced.

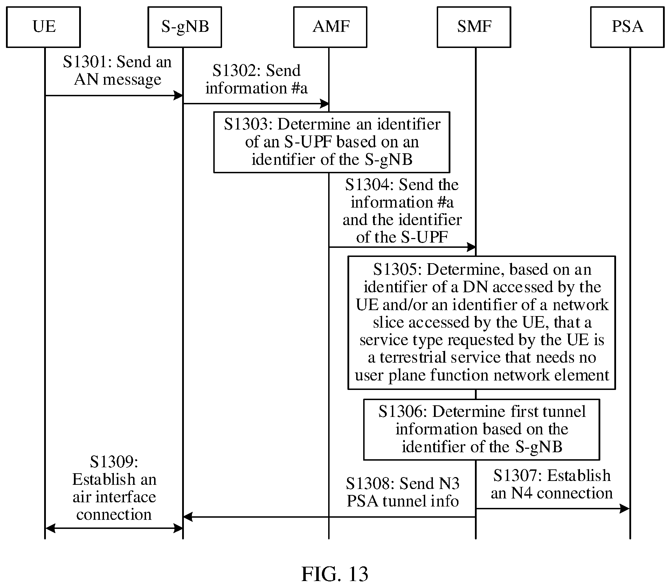

For different service types, the following describes the method in FIG. 12 in detail with reference to FIG. 13 to FIG. 16.

FIG. 13 shows a method according to this application. The method corresponds to that the service type requested by the UE is a terrestrial service that needs no user plane function network element.

S1301: The UE sends an AN message to the S-gNB. Correspondingly, the S-gNB receives the AN message.

The AN message includes the PDU session ID, the session establishment request message, and the identifier of the DN accessed by the UE and/or the identifier of the network slice accessed by the UE.

S1302: The S-gNB sends the information #a to the AMF. Correspondingly, the AMF receives the information #a.

The information #a includes the identifier of the S-gNB, the identifier of the DN accessed by the UE, and/or the identifier of the network slice accessed by the UE.

This process is the same as S1210. Details are not described again.

S1303: The AMF determines the identifier of the S-UPF based on the identifier of the S-gNB.

Specifically, the AMF may determine, based on the identifier of the S-gNB and/or the satellite access type of the UE, that the UE accesses the satellite. Further, the AMF may determine the identifier of the S-UPF based on the identifier of the S-gNB.

Optionally, the AMF may determine, based on the identifier of the S-gNB, an identifier of the satellite to which the S-gNB belongs.

S1304: The AMF sends the information #a and the identifier of the S-UPF to the SMF. Correspondingly, the SMF receives the information #a and the identifier of the S-UPF.

This process is the same as S1230. Details are not described again.

Optionally, the AMF may send one or more of the identifier of the S-gNB, the identifier of the S-UPF, and the identifier of the satellite to the SMF.

S1305: The SMF determines, based on the identifier of the DN accessed by the UE and/or the identifier of the network slice accessed by the UE, that the service type requested by the UE is the terrestrial service that needs no user plane function network element.

S1306: The SMF determines first tunnel information of the S-gNB (N3 gNB tunnel info) based on the identifier of the S-gNB.

For example, the SMF may determine the first tunnel information based on the identifier of the S-gNB and the tunnel address range corresponding to the S-gNB. The tunnel address range corresponding to the S-gNB may include the first tunnel information.

For example, the tunnel address range corresponding to the S-gNB is (A, B, C, D, E) and the tunnel addresses A, B, C, and D are all allocated. In this case, the SMF determines that the first tunnel information of the S-gNB is the tunnel address E.

Optionally, if the SMF receives the identifier of the S-UPF or the identifier of the satellite, the SMF may determine the identifier of the S-gNB based on the identifier of the S-UPF or the identifier of the satellite, and further determine the first tunnel information of the S-gNB based on the identifier of the S-gNB.

S1307: The SMF selects a terrestrial PSA (denoted as a PSA #1), and establishes an N4 connection to the PSA #1.

In this process, the SMF sends the first tunnel information to the PSA #1, and obtains tunnel information of the PSA #1 (N3 PSA tunnel info) from the PSA #1.

For this process, refer to S804.

S1308: The SMF sends the N3 PSA tunnel info to the S-gNB. Correspondingly, the S-gNB receives the N3 PSA tunnel info.

Optionally, the SMF further sends the N3 gNB tunnel info to the S-gNB.

For a specific sending manner, refer to S805.

S1309: The S-gNB establishes an air interface connection to the UE.

In this process, the S-gNB may send air interface configuration information and a session establishment accept message of the UE to the UE.

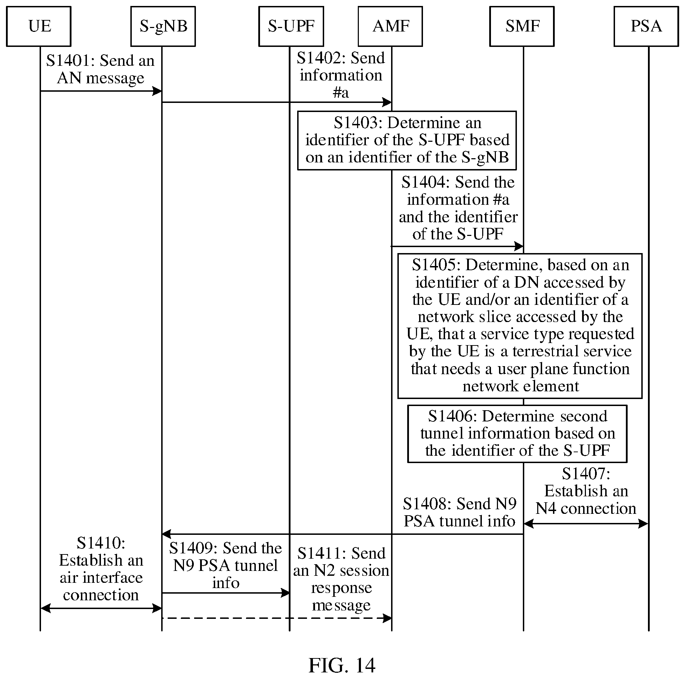

FIG. 14 shows a method according to this application. The method corresponds to that the service type requested by the UE is a terrestrial service that needs a user plane function network element.

S1401: The UE sends an AN message to the S-gNB. Correspondingly, the S-gNB receives the AN message.

This process is the same as S1301. Details are not described again.

S1402: The S-gNB sends the information #a to the AMF. Correspondingly, the AMF receives the information #a.

The information #a includes the identifier of the S-gNB, the identifier of the DN accessed by the UE, and/or the identifier of the network slice accessed by the UE.

This process is the same as S1210. Details are not described again.

S1403: The AMF determines the identifier of the S-UPF based on the identifier of the S-gNB.

Optionally, the AMF may determine, based on the identifier of the S-gNB, an identifier of the satellite to which the S-gNB belongs.

S1404: The AMF sends the information #a and the identifier of the S-UPF to the SMF. Correspondingly, the SMF receives the information #a and the identifier of the S-UPF.

This process is the same as S1230. Details are not described again.

Optionally, the AMF may send one or more of the identifier of the S-gNB, the identifier of the S-UPF, and the identifier of the satellite to the SMF.

S1405: The SMF determines, based on the identifier of the DN accessed by the UE and/or the identifier of the network slice accessed by the UE, that the service type requested by the UE is the terrestrial service that needs a user plane function network element.

S1406: The SMF determines second tunnel information of the S-UPF (N9 S-UPF tunnel info) based on the identifier of the S-UPF.

For example, the SMF may determine the second tunnel information based on the identifier of the S-UPF and the tunnel address range corresponding to the S-UPF. The tunnel address range corresponding to the S-UPF may include the second tunnel information.

For example, the tunnel address range corresponding to the S-UPF is (A, B, C, D, E), and the tunnel addresses A, B, C, and D are all allocated. In this case, the SMF determines that the second tunnel information of the S-UPF is the tunnel address E.

Optionally, if the SMF receives the identifier of the S-gNB or the identifier of the satellite, the SMF may determine the identifier of the S-UPF based on the identifier of the S-gNB or the identifier of the satellite, and further determine the second tunnel information of the S-UPF based on the identifier of the S-UPF.

Optionally, the SMF may further determine fourth tunnel information of the S-UPF (N3 S-UPF tunnel info) based on the identifier of the S-UPF.

S1407: The SMF selects a terrestrial PSA (denoted as a PSA #1), and establishes an N4 connection to the PSA #1.

In this process, the SMF sends the second tunnel information to the PSA#1, and obtains tunnel information of the PSA #1 (N9 PSA tunnel info) from the PSA #1.

This process is the same as S904. Details are not described herein again.

S1408: The SMF sends the N9 PSA tunnel info to the S-gNB. Correspondingly, the S-gNB receives the N9 PSA tunnel info.

Optionally, the SMF further sends at least one of rule information, the second tunnel information, and the fourth tunnel information to the S-gNB.

For a specific sending manner, refer to S905.

S1409: The S-gNB sends the N9 PSA tunnel info to the S-UPF. Correspondingly, the S-UPF receives the N9 PSA tunnel info.

In a manner, the S-gNB may send the N9 PSA tunnel info to the S-UPF in a process of establishing an N3 tunnel connection to the S-UPF.

For the process of establishing the N3 tunnel connection between the S-gNB and the S-UPF, refer to the foregoing descriptions. For example, the N9 PSA tunnel info may be carried in the foregoing request message #2.

In another manner, after the S-gNB establishes the N3 tunnel connection to the S-UPF, the S-gNB may further send the N9 PSA tunnel info to the S-UPF.

Optionally, the S-gNB further sends at least one of the rule information, the second tunnel information, and the fourth tunnel information to the S-UPF.

It should be understood that, it can be learned from S1408 and S1409 that the SMF sends the foregoing information to the S-UPF via the S-gNB. In another manner, the SMF may alternatively directly send the foregoing information to the S-UPF.

S1410: The S-gNB establishes an air interface connection to the UE.

In this process, the S-gNB may send air interface configuration information and a session establishment accept message to the UE.

Optionally, in S1411, the S-gNB sends an N2 session response message to the AMF. Correspondingly, the AMF receives the N2 session response message.

The N2 session response message does not include first tunnel information.

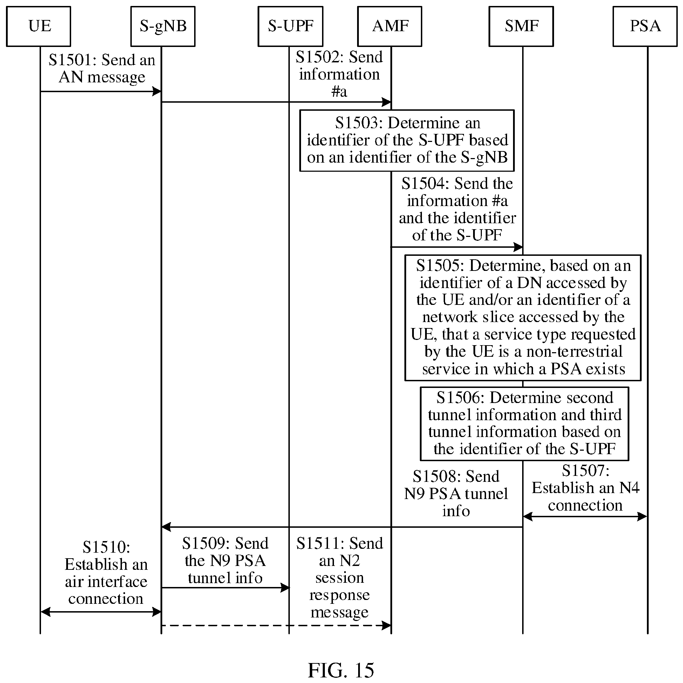

FIG. 15 shows a method according to this application. The method corresponds to that the service type requested by the UE is a non-terrestrial service in which a PSA exists.

S1501: The UE sends an AN message to the S-gNB. Correspondingly, the S-gNB receives the AN message.

This process is the same as S1301. Details are not described again.

S1502: The S-gNB sends the information #a to the AMF. Correspondingly, the AMF receives the information #a.

The information #a includes the identifier of the S-gNB, the identifier of the DN accessed by the UE, and/or the identifier of the network slice accessed by the UE.

This process is the same as S1210. Details are not described again.

S1503: The AMF determines the identifier of the S-UPF based on the identifier of the S-gNB.

Optionally, the AMF may determine, based on the identifier of the S-gNB, an identifier of the satellite to which the S-gNB belongs.

S1504: The AMF sends the information #a and the identifier of the S-UPF to the SMF. Correspondingly, the SMF receives the information #a and the identifier of the S-UPF.

This process is the same as S1230. Details are not described again.

Optionally, the AMF may send one or more of the identifier of the S-gNB, the identifier of the S-UPF, and the identifier of the satellite to the SMF.

S1505: The SMF determines, based on the identifier of the DN accessed by the UE and/or the identifier of the network slice accessed by the UE, that the service type requested by the UE is the non-terrestrial service in which a PSA exists.

S1506: The SMF determines second tunnel information of the S-UPF (N9 S-UPF tunnel info) and third tunnel information of the S-UPF (Nx S-UPF tunnel info) based on the identifier of the S-UPF.

For example, the SMF may determine the second tunnel information and the third tunnel information based on the identifier of the S-UPF and the tunnel address range corresponding to the S-UPF. The tunnel address range corresponding to the S-UPF may include the second tunnel information and the third tunnel information.

Optionally, the SMF may further determine fourth tunnel information of the S-UPF (N3 S-UPF tunnel info) based on the identifier of the S-UPF.

S1507: The SMF selects a terrestrial PSA (denoted as a PSA #1), and establishes an N4 connection to the PSA #1.

In this process, the SMF sends the second tunnel information to the PSA #1, and obtains tunnel information of the PSA #1 (N9 PSA tunnel info) from the PSA #1.

This process is the same as S904. Details are not described herein again.

In addition, in a case, the SMF may send the third tunnel information to a peer UPF, and obtain tunnel information of the peer UPF.

S1508: The SMF sends the N9 PSA tunnel info to the S-gNB. Correspondingly, the S-gNB receives the N9 PSA tunnel info.

Optionally, the SMF further sends one or more of rule information, the second tunnel information, the third tunnel information, the fourth tunnel information, and the tunnel information of the peer UPF to the S-gNB.

S1509: The S-gNB sends the N9 PSA tunnel info to the S-UPF. Correspondingly, the S-UPF receives the N9 PSA tunnel info.

For a specific sending manner, refer to S1409. Details are not described herein again.

Optionally, the S-gNB further sends one or more of the rule information, the second tunnel information, the third tunnel information, the fourth tunnel information, and the tunnel information of the peer UPF to the S-UPF.

It should be understood that, it can be learned from S1508 and S1509 that the SMF sends the foregoing information to the S-UPF via the S-gNB. In another manner, the SMF may alternatively directly send the foregoing information to the S-UPF.

S1510: The S-gNB establishes an air interface connection to the UE.

In this process, the S-gNB may send air interface configuration information and a session establishment accept message to the UE.

Optionally, in S1511, the S-gNB sends an N2 session response message to the AMF. Correspondingly, the AMF receives the N2 session response message.

The N2 session response message does not include first tunnel information.

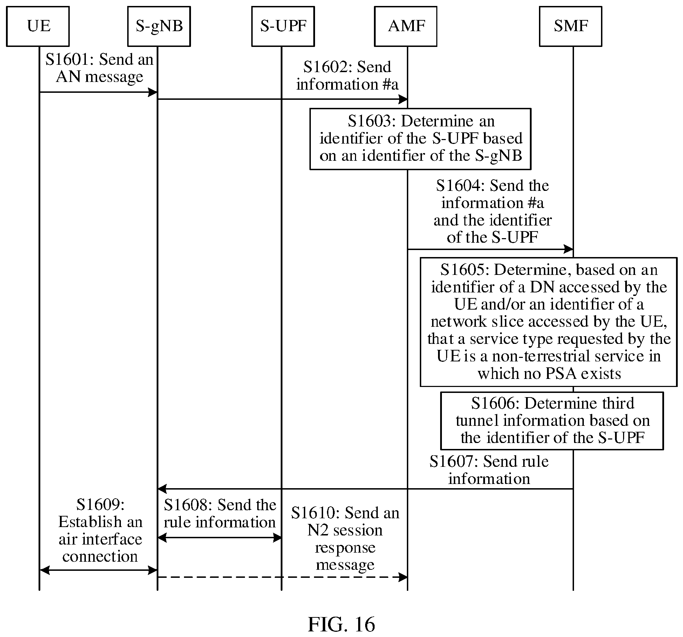

FIG. 16 shows a method according to this application. The method corresponds to that the service type requested by the UE is a non-terrestrial service in which no PSA exists.

S1601: The UE sends an AN message to the S-gNB. Correspondingly, the S-gNB receives the AN message.

This process is the same as S1301. Details are not described again.

S1602: The S-gNB sends the information #a to the AMF. Correspondingly, the AMF receives the information #a.

The information #a includes the identifier of the S-gNB, the identifier of the DN accessed by the UE, and/or the identifier of the network slice accessed by the UE.

This process is the same as S1210. Details are not described again.

S1603: The AMF determines the identifier of the S-UPF based on the identifier of the S-gNB.

Optionally, the AMF may determine, based on the identifier of the S-gNB, an identifier of the satellite to which the S-gNB belongs.

S1604: The AMF sends the information #a and the identifier of the S-UPF to the SMF. Correspondingly, the SMF receives the information #a and the identifier of the S-UPF.

This process is the same as S1230. Details are not described again.

Optionally, the AMF may send one or more of the identifier of the S-gNB, the identifier of the S-UPF, and the identifier of the satellite to the SMF.

S1605: The SMF determines, based on the identifier of the DN accessed by the UE and/or the identifier of the network slice accessed by the UE, that the service type requested by the UE is the non-terrestrial service in which no PSA exists.

For example, the SMF may further determine, based on the subscription information of the UE, that the DN and/or the network slice accessed by the UE are/is in the subscription information. In this way, it may be determined that the UE is allowed to request the non-terrestrial service in which no PSA exists.

S1606: The SMF determines third tunnel information of the S-UPF (Nx S-UPF tunnel info) based on the identifier of the S-UPF.

For example, the SMF may determine the third tunnel information based on the identifier of the S-UPF and the tunnel address range corresponding to the S-UPF. The tunnel address range corresponding to the S-UPF may include the third tunnel information.

Optionally, if the SMF receives the identifier of the S-gNB or the identifier of the satellite, the SMF may determine the identifier of the S-UPF based on the identifier of the S-gNB or the identifier of the satellite, and further determine the third tunnel information of the S-UPF based on the identifier of the S-UPF.

Optionally, the SMF may further determine fourth tunnel information of the S-UPF (N3 S-UPF tunnel info) based on the identifier of the S-UPF.

In addition, in a case, the SMF may send the third tunnel information to a peer UPF, and obtain tunnel information of the peer UPF.

S1607: The SMF sends rule information to the S-gNB. Correspondingly, the S-gNB receives the rule information.

Optionally, the SMF further sends one or more of the tunnel information of the peer UPF, the third tunnel information, and the fourth tunnel information to the S-gNB.

For a specific sending manner, refer to S805. Details are not described herein again.

S1608: The S-gNB sends the rule information to the S-UPF. Correspondingly, the S-UPF receives the rule information.

Optionally, the S-gNB further sends one or more of the tunnel information of the peer UPF, the third tunnel information, and the fourth tunnel information to the S-UPF.

For a specific sending manner, refer to S1409.

It can be learned from S1607 and S1608 that the SMF sends the foregoing information to the S-UPF via the S-gNB. In another manner, the SMF may directly send the foregoing information to the S-UPF.

S1609: The S-gNB establishes an air interface connection to the UE.

In this process, the S-gNB may send air interface configuration information and a session establishment accept message of the UE to the UE.

Optionally, in S1610, the S-gNB sends an N2 session response message to the AMF. Correspondingly, the AMF receives the N2 session response message.

The N2 session response message does not include first tunnel information.

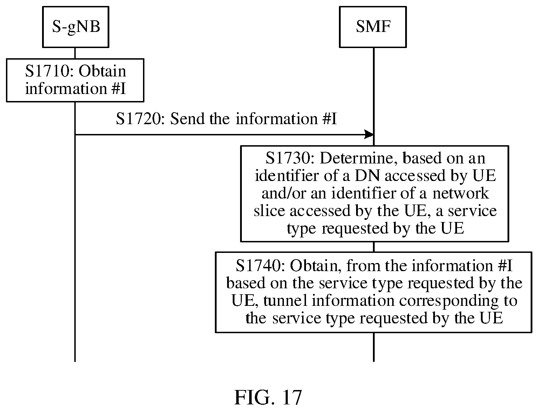

FIG. 17 shows a method according to this application. The method includes the following steps.

S1710: An S-gNB obtains information #I.

The information #I includes an identifier of a DN accessed by UE and/or an identifier of a network slice accessed by the UE, and further includes first tunnel information of the S-gNB (N3 gNB tunnel info), second tunnel information of an S-UPF (N9 S-UPF tunnel info), and third tunnel information of the S-UPF (Nx S-UPF tunnel info).

The S-gNB may obtain the N3 gNB tunnel info locally.

In a manner, if an N3 tunnel connection has been established between the S-gNB and the S-UPF, the S-gNB may obtain the N9 S-UPF tunnel info and the Nx S-UPF tunnel info locally.

In a manner, if no N3 tunnel connection has been established between the S-gNB and the S-UPF, the S-gNB may obtain the N9 S-UPF tunnel info and the Nx S-UPF tunnel info from the S-UPF in a process of establishing the N3 tunnel connection to the S-UPF.

It should be understood that, before S1710, the UE may send an AN message to the S-gNB. The AN message includes the identifier of the DN accessed by the UE and/or the identifier of the network slice accessed by the UE, and may further include a PDU session ID and a session establishment request message.

It should be noted that, that no N3 tunnel connection has been established between the S-gNB and the UPF may be understood as follows: The S-gNB may determine, based on the PDU session ID in the AN message, whether tunnel information corresponding to the session identifier is stored. If the tunnel information corresponding to the session identifier is stored, it is determined that the N3 tunnel connection corresponding to the session has been established between the S-gNB and the S-UPF. If the tunnel information corresponding to the session identifier is not stored, it is determined that the N3 tunnel connection corresponding to the session is not established between the S-gNB and the S-UPF.

S1720: The S-gNB sends the information #I to an SMF. Correspondingly, the SMF receives the information #I.

It should be understood that the S-gNB may send the information #I to the SMF by using one or more messages.

In a manner, the S-gNB may send the information #I to the SMF via an AMF.

For example, the S-gNB may send an N2 message to the AMF, where the N2 message includes the information #I. In addition, the N2 message may further include the PDU session ID and the session establishment request message.

For example, the AMF may send an Nsmf_PDUSession_CreateSMContext Request message to the SMF, where the Nsmf_PDUSession_CreateSMContext Request message includes the information #I. In addition, the Nsmf_PDUSession_CreateSMContext Request message may further include an SUPI, the PDU session ID, an AMF ID, and the session establishment request message.

S1730: The SMF determines, based on the identifier of the DN accessed by the UE and/or the identifier of the network slice accessed by the UE, a service type requested by the UE.

In a manner, the SMF may determine, based on the identifier of the DN accessed by the UE and/or the identifier of the network slice accessed by the UE, and subscription information of the UE and/or local configuration information, the service type requested by the UE.

S1740: The SMF obtains, from the information #I based on the service type requested by the UE, tunnel information corresponding to the service type requested by the UE.

It should be noted that, in a possible implementation, the S-gNB receives the AN message of the UE. In this case, step S1710 is performed, in other words, the S-gNB obtains the information #I. When the SMF determines that a current procedure is a session establishment procedure or a service request procedure, the SMF performs an action in S1740. When the SMF determines that a current procedure is another procedure, for example, a session modification procedure or an AN release procedure, the SMF generates indication information #A and sends the indication information #A to the S-gNB, where the indication information #A indicates the S-gNB to release or delete the tunnel information in the information #I.

According to the method in this application, the SMF may obtain, from the information #I based on the service type requested by the UE, the tunnel information corresponding to the service type requested by the UE. Therefore, according to the method in this application a quantity of interactions between a satellite and a terrestrial network element can be reduced, so that a process of establishing a user plane connection is simplified, and a latency of establishing the user plane connection is reduced.

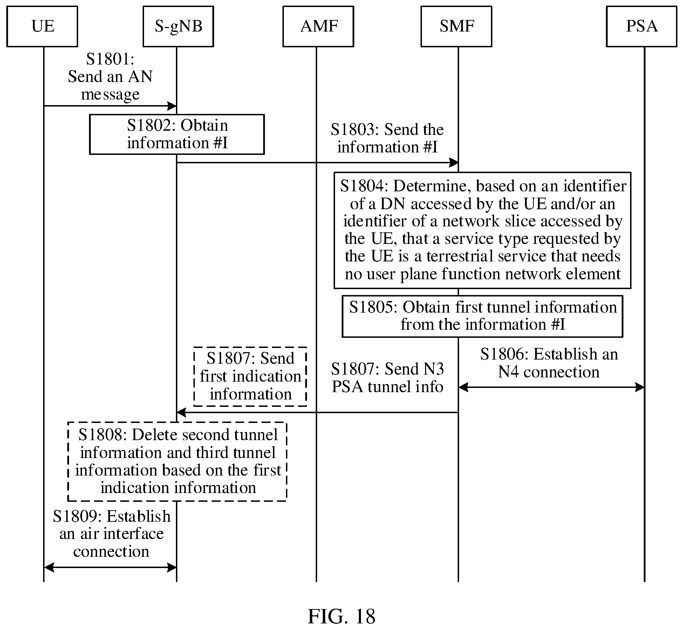

For different service types, the following describes the method shown in FIG. 17 in detail with reference to FIG. 18 to FIG. 21.

FIG. 18 shows a method according to this application. The method corresponds to that the service type requested by the UE is a terrestrial service that needs no user plane function network element.

S1801: The UE sends the AN message to the S-gNB. Correspondingly, the S-gNB receives the AN message.

The AN message includes the identifier of the DN accessed by the UE and/or the identifier of the network slice accessed by the UE, the PDU session ID, and the session establishment request message.

S1802: The S-gNB obtains the information #I.

For this process, refer to S1710.

S1803: The S-gNB sends the information #I to the SMF. Correspondingly, the SMF receives the information #I.

For this process, refer to S1720.

S1804: The SMF determines, based on the identifier of the DN accessed by the UE and/or the identifier of the network slice accessed by the UE, that the service type requested by the UE is the terrestrial service that needs no user plane function network element.

S1805: The SMF obtains the first tunnel information of the S-gNB (N3 gNB tunnel info) from the information #I.

S1806: The SMF selects a terrestrial PSA (denoted as a PSA #1), and establishes an N4 connection to the PSA #1.

In this process, the SMF sends the first tunnel information to the PSA #1, and obtains tunnel information of the PSA #1 (N3 PSA tunnel info) from the PSA #1.

This process is the same as S804. Details are not described herein again.

S1807: The SMF sends the N3 PSA tunnel info to the S-gNB. Correspondingly, the S-gNB receives the N3 PSA tunnel info.

In addition, in a first possible manner, the SMF may further send first indication information to the S-gNB. The first indication information indicates to delete the second tunnel information and the third tunnel information. Further, the S-gNB may send the first indication information to the S-UPF.

In a second possible manner, the SMF may further send first indication information to the S-UPF. Further, the S-UPF may send the first indication information to the S-gNB.

In a third possible manner, the SMF may further send first indication information to the S-gNB, and send the first indication information to the S-UPF.

In a manner, the SMF may send the N3 PSA tunnel info and the first indication information to the S-gNB via the AMF.

For example, the SMF may send an Namf_Communication_N1N2MessageTransfer message to the AMF, where the Namf_Communication_N1N2MessageTransfer message includes the N3 PSA tunnel info and the first indication information. In addition, the Namf_Communication_N1N2MessageTransfer message may further include the PDU session ID, the N2 SM info, and a session establishment accept message.

For example, the AMF sends an N2 PDU session request message to the S-gNB, where the N2 PDU session request message includes the N3 PSA tunnel info and the first indication information. In addition, the N2 PDU session request message may further include the PDU session ID, the N2 SM info, and the session establishment accept message.

Optionally, in S1808, the S-gNB deletes the second tunnel information and the third tunnel information in the information #I based on the first indication information.

For example, the S-UPF deletes the second tunnel information and the third tunnel information based on the first indication information.

For example, the S-gNB may further delete or release the N3 tunnel connection between the S-gNB and the S-UPF based on the first indication information.

S1809: The S-gNB establishes an air interface connection to the UE.

In this process, the S-gNB may send air interface configuration information and the session establishment accept message of the UE to the UE.

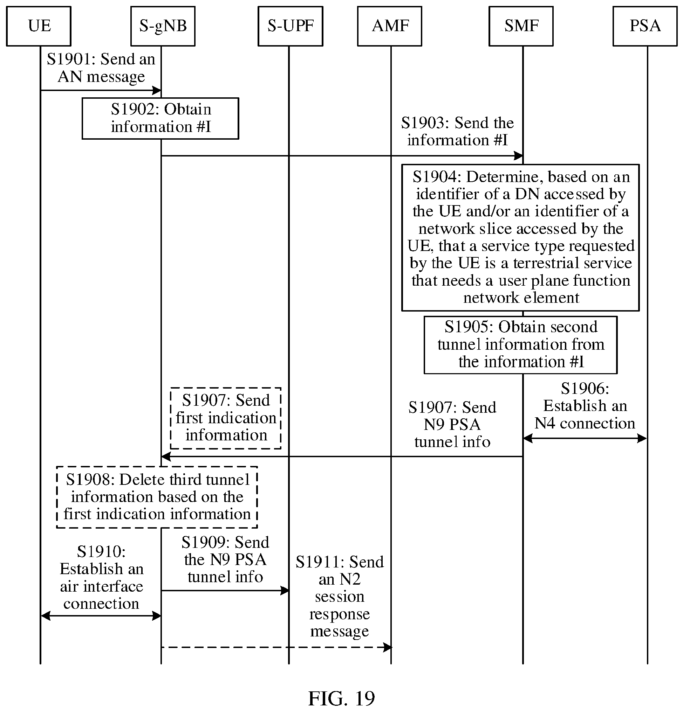

FIG. 19 shows a method according to this application. The method corresponds to that the service type requested by the UE is a terrestrial service that needs a user plane function network element.

S1901: The UE sends the AN message to the S-gNB. Correspondingly, the S-gNB receives the AN message.

For this process, refer to S1801.

S1902: The S-gNB obtains the information #I.

For this process, refer to S1710.

S1903: The S-gNB sends the information #I to the SMF. Correspondingly, the SMF receives the information #I.

For this process, refer to S1720.

S1904: The SMF determines, based on the identifier of the DN accessed by the UE and/or the identifier of the network slice accessed by the UE, that the service type requested by the UE is the terrestrial service that needs a user plane function network element.

S1905: The SMF obtains the second tunnel information of the S-UPF (N9 S-UPF tunnel info) from the information #I.

S1906: The SMF selects a terrestrial PSA (denoted as a PSA #1), and establishes an N4 connection to the PSA #1.

In this process, the SMF sends the second tunnel information to the PSA#1, and obtains tunnel information of the PSA #1 (N9 PSA tunnel info) from the PSA #1.

This process is the same as S904. Details are not described herein again.

S1907: The SMF sends the N9 PSA tunnel info to the S-gNB. Correspondingly, the S-gNB receives the N9 PSA tunnel info.

In addition, in a first possible manner, the SMF further sends first indication information to the S-gNB. The first indication information indicates to delete the third tunnel information. Further, the S-gNB may send the first indication information to the S-UPF.

In a second possible manner, the SMF may further send first indication information to the S-UPF. Further, the S-UPF may send the first indication information to the S-gNB.

In a third possible manner, the SMF may further send first indication information to the S-gNB, and send the first indication information to the S-UPF.

For a specific sending manner, refer to the descriptions in S1807.

Optionally, in S1908, the S-gNB deletes the third tunnel information in the information #I based on the first indication information.

For example, the S-UPF deletes the third tunnel information based on the first indication information.

S1909: The S-gNB sends the N9 PSA tunnel info to the S-UPF. Correspondingly, the S-UPF receives the N9 PSA tunnel info.

S1910: The S-gNB establishes an air interface connection to the UE.

In this process, the S-gNB may send air interface configuration information and a session establishment accept message of the UE to the UE.

Optionally, in S1911, the S-gNB sends an N2 session response message to the AMF. Correspondingly, the AMF receives the N2 session response message.

The N2 session response message does not include the first tunnel information.

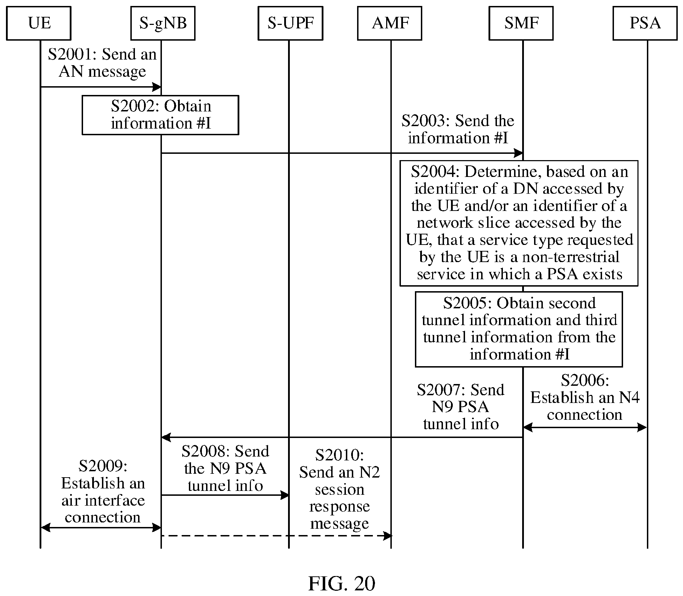

FIG. 20 shows a method according to this application. The method corresponds to that the service type requested by the UE is a non-terrestrial service in which a PSA exists.

S2001: The UE sends the AN message to the S-gNB. Correspondingly, the S-gNB receives the AN message.

For this process, refer to S1801.

S2002: An S-gNB obtains the information #I.

For this process, refer to S1710.

S2003: The S-gNB sends the information #I to the SMF. Correspondingly, the SMF receives the information #I.

For this process, refer to S1720.

S2004: The SMF determines, based on the identifier of the DN accessed by the UE and/or the identifier of the network slice accessed by the UE, that the service type requested by the UE is the non-terrestrial service in which a PSA exists.

S2005: The SMF obtains the second tunnel information of the S-UPF (N9 S-UPF tunnel info) and the third tunnel information of the S-UPF (Nx S-UPF tunnel info) from the information #I.

S2006: The SMF selects a terrestrial PSA (denoted as a PSA #1), and establishes an N4 connection to the PSA #1.

In this process, the SMF sends the second tunnel information to the PSA#1, and obtains tunnel information of the PSA #1 (N9 PSA tunnel info) from the PSA #1.

This process is the same as S904. Details are not described herein again.

In addition, in a case, the SMF may send the third tunnel information to a peer UPF, and obtain tunnel information of the peer UPF.

S2007: The SMF sends the N9 PSA tunnel info to the S-gNB. Correspondingly, the S-gNB receives the N9 PSA tunnel info.

Optionally, the SMF further sends at least one of the tunnel information of the peer UPF and rule information to the S-gNB.

For a specific sending manner, refer to the descriptions in S1807.

S2008: The S-gNB sends the N9 PSA tunnel info to the S-UPF. Correspondingly, the S-UPF receives the N9 PSA tunnel info.

Optionally, the S-gNB sends at least one of the tunnel information of the peer UPF and the rule information to the S-UPF.

It can be learned from S2007 and S2008 that the SMF sends the foregoing information to the S-UPF via the S-gNB. In another manner, the SMF may directly send the foregoing information to the S-UPF.

S2009: The S-gNB establishes an air interface connection to the UE.

In this process, the S-gNB may send air interface configuration information and a session establishment accept message of the UE to the UE.

Optionally, in S2010, the S-gNB sends an N2 session response message to the AMF. Correspondingly, the AMF receives the N2 session response message.

The N2 session response message does not include the first tunnel information.

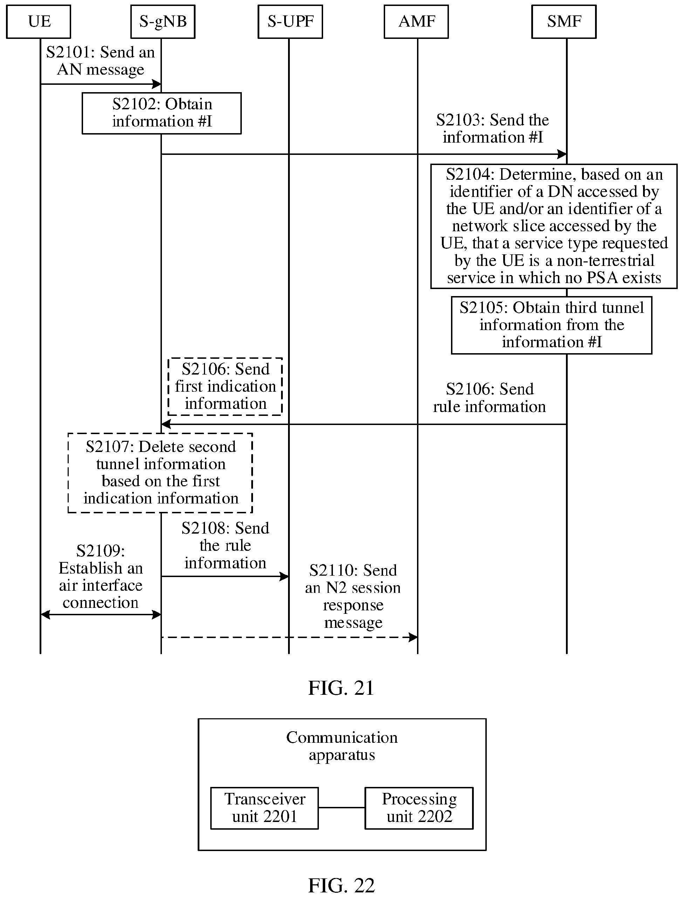

FIG. 21 shows a method according to this application. The method corresponds to that the service type requested by the UE is a non-terrestrial service in which no PSA exists.

S2101: The UE sends the AN message to the S-gNB. Correspondingly, the S-gNB receives the AN message.

For this process, refer to S1801.

S2102: The S-gNB obtains the information #I.

For this process, refer to S1710.

S2103: The S-gNB sends the information #I to the SMF. Correspondingly, the SMF receives the information #I.

For this process, refer to S1720.

S2104: The SMF determines, based on the identifier of the DN accessed by the UE and/or the identifier of the network slice accessed by the UE, that the service type requested by the UE is the non-terrestrial service in which no PSA exists.

For example, the SMF may further determine, based on the subscription information of the UE, that the DN and/or the network slice accessed by the UE are/is in the subscription information. In this way, it may be determined that the UE is allowed to request the non-terrestrial service in which no PSA exists.

S2105: The SMF obtains the third tunnel information of the S-UPF (Nx S-UPF tunnel info) from the information #I.

In addition, in a case, the SMF may send the third tunnel information to a peer UPF, and obtain tunnel information of the peer UPF.

S2106: The SMF sends rule information to the S-gNB. Correspondingly, the S-gNB receives the rule information.

In addition, in a first possible manner, the SMF further sends first indication information to the S-gNB. The first indication information indicates to delete the second tunnel information. Further, the S-gNB may send the first indication information to the S-UPF.

In a second possible manner, the SMF may further send first indication information to the S-UPF. Further, the S-UPF may send the first indication information to the S-gNB.

In a third possible manner, the SMF may further send first indication information to the S-gNB, and send the first indication information to the S-UPF.

Optionally, the SMF further sends the tunnel information of the peer UPF to the S-gNB.

For a specific sending manner, refer to the descriptions in S1807.

S2107: The S-gNB deletes the second tunnel information in the information #I based on the first indication information.

For example, the S-UPF deletes the second tunnel information based on the first indication information.

It should be understood that S2107 is an optional step.

S2108: The S-gNB sends the rule information to the S-UPF. Correspondingly, the S-UPF receives the rule information.

Optionally, the S-gNB further sends the tunnel information of the peer UPF to the S-UPF.

It can be learned from S2106 and S2108 that the SMF sends the foregoing information to the S-UPF via the S-gNB. In another manner, the SMF may directly send the foregoing information to the S-UPF.

S2109: The S-gNB establishes an air interface connection to the UE.

In this process, the S-gNB may send air interface configuration information and a session establishment accept message of the UE to the UE.

Optionally, in S2110, the S-gNB sends an N2 session response message to the AMF. Correspondingly, the AMF receives the N2 session response message.

The N2 session response message does not include the first tunnel information.

According to the foregoing method, FIG. 22 shows a communication apparatus according to an embodiment of this application. The communication apparatus includes a transceiver unit 2201 and a processing unit 2202.

The transceiver unit 2201 may be configured to implement a corresponding communication function. The transceiver unit 2201 may also be referred to as a communication interface or a communication unit. The processing unit 2202 may be configured to perform a processing operation.

Optionally, the apparatus further includes a storage unit. The storage unit may be configured to store instructions and/or data. The processing unit 2202 may read the instructions and/or the data in the storage unit, so that the apparatus implements actions of the apparatus in the foregoing method embodiments.

For example, the apparatus may be the SMF, the AMF, the PSA, the UE, the S-gNB, or the S-UPF in the foregoing embodiments, or certainly may be a component (for example, a chip) of the foregoing apparatus. The transceiver unit and the processing unit may be configured to implement related operations of the foregoing apparatus in the foregoing method embodiments.

It should be understood that a specific process in which the units perform the foregoing corresponding steps is described in detail in the foregoing method embodiments. For brevity, details are not described herein again.

It should also be understood that the apparatus herein is presented in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus may be specifically a first network element in the foregoing embodiments, and may be configured to perform the procedures and/or steps corresponding to the first network element in the foregoing method embodiments. Alternatively, the apparatus may be specifically the network management network element in the foregoing embodiments, and may be configured to perform the procedures and/or steps corresponding to the network management network element in the foregoing method embodiments. To avoid repetition, details are not described herein again.

The foregoing communication apparatus has a function of implementing corresponding steps performed by the apparatus in the foregoing method. The function may be implemented by hardware, or may be implemented by executing corresponding software by hardware. The hardware or software includes one or more modules corresponding to the foregoing function. For example, a transceiver unit may be replaced with a transceiver (for example, a sending unit in the transceiver unit may be replaced with a transmitter, and a receiving unit in the transceiver unit may be replaced with a receiver), and another unit such as a processing unit may be replaced with a processor, to separately perform sending and receiving operations and a related processing operation in the method embodiments.

In addition, the transceiver unit 2201 may alternatively be a transceiver circuit (for example, may include a receiving circuit and a sending circuit), and the processing unit may be a processing circuit.

It should be noted that the apparatus in FIG. 22 may be an apparatus in the foregoing method embodiments, or may be a chip or a chip system, for example, a system on chip (system on chip, SoC). The transceiver unit may be an input/output circuit or a communication interface. The processing unit is a processor, a microprocessor, or an integrated circuit integrated on the chip. This is not limited herein.

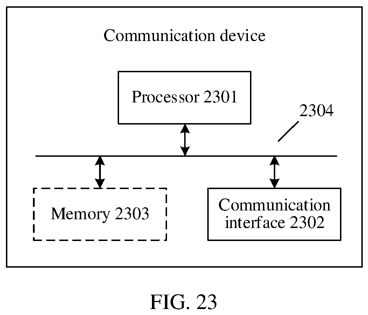

An embodiment of this application further provides a communication device. As shown in FIG. 23, the communication device includes a processor 2301 and a communication interface 2302. The processor 2301 is configured to execute a computer program or instructions stored in a memory 2303, or read data stored in the memory 2303, to perform the methods in the foregoing method embodiments. Optionally, there are one or more processors 2301. The communication interface 2302 is configured to receive and/or send a signal. For example, the processor 2301 is configured to control the communication interface 2302 to receive and/or send a signal.

Optionally, as shown in FIG. 23, the communication device further includes the memory 2303. The memory 2303 is configured to store a computer program or instructions and/or data. The memory 2303 may be integrated with the processor 2301, or may be disposed separately. Optionally, there are one or more memories 2303.

Optionally, the processor 2301, the communication interface 2302, and the memory 2303 are connected to each other through a bus 2304. The bus 2304 may be a peripheral component interconnect (peripheral component interconnect, PCI) bus, an extended industry standard architecture (extended industry standard architecture, EISA) bus, or the like. The bus 2304 may be classified into an address bus, a data bus, a control bus, and the like. For ease of representation, the bus is represented by using only one bold line in FIG. 23. However, it does not indicate that there is only one bus or only one type of bus.

For example, the processor 2301 is configured to execute the computer program or the instructions stored in the memory 2303, to implement related operations of the SMF, the AMF, the PSA, the UE, the S-gNB, or the S-UPF in the foregoing method embodiments.

It should be understood that a processor (for example, the processor 2301) mentioned in embodiments of this application may be a central processing unit (central processing unit, CPU), a network processor (network processor, NP), or a combination of a CPU and an NP. The processor may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable logic gate array (field-programmable logic gate array, FPGA), a generic array logic (generic array logic, GAL), or any combination thereof.

It should be further understood that a memory (for example, the memory 2303) mentioned in embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A professional technician may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus and method may be implemented in another manner. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. Some or all of the units may be selected based on actual needs to achieve the objectives of the solutions of embodiments.

In addition, functional units in embodiments of this application may be integrated into one processing unit, each of the units may exist alone physically, or two or more units are integrated into one unit.

When functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
obtaining (S210), by a session management network element (SMF), an identifier of a data network, DN, accessed by a terminal device (UE) and/or an identifier of a network slice accessed by the terminal device (UE);
determining (S220), by the session management network element (SMF) based on the identifier of the DN and/or the identifier of the network slice, a service type requested by the terminal device (UE);
requesting (S230), by the session management network element (SMF) from an access network device (S-gNB) on a satellite, tunnel information corresponding to the service type; and
receiving (S240), by the session management network element (SMF) from the access network device (S-gNB), the tunnel information corresponding to the service type; wherein
the requesting (S230), by the session management network element (SMF) from an access network device (S-gNB), tunnel information corresponding to the service type comprises:
requesting (S404), by the session management network element (SMF) from the access network device (S-gNB), second tunnel information of a user plane function network element (S-UPF) on the satellite, wherein the service type is a terrestrial service that needs a user plane function network element (UPF), and the second tunnel information is used to establish a tunnel between the user plane function network element (S-UPF) on the satellite and a protocol data unit session anchor, PSA.

2. The method according to claim 1, wherein
the requesting (S230), by the session management network element (SMF) from an access network device (S-gNB), tunnel information corresponding to the service type comprises:
requesting (S304), by the session management network element (SMF) from the access network device (S-gNB), first tunnel information of the access network device (S-gNB), wherein the service type is a terrestrial service that needs no user plane function network element (UPF), and the first tunnel information is used to establish a tunnel between the access network device (S-gNB) and a protocol data unit session anchor, PSA.

3. The method according to claim 2, further comprising:
sending (S309), by the session management network element (SMF), the first tunnel information to the PSA.

4. The method according to claim 1, further comprising:
sending (S410), by the session management network element, the second tunnel information to the PSA.

5. The method according to claim 1, wherein
the requesting (S230), by the session management network element (SMF) from an access network device (S-gNB), tunnel information corresponding to the service type comprises:
requesting (S504), by the session management network element (SMF) from the access network device (S-gNB), second tunnel information of a user plane function network element (S-UPF) on the satellite and third tunnel information of the user plane function network element (S-UPF) on the satellite, wherein the service type is a non-terrestrial service in which a protocol data unit session anchor, PSA, exists, the second tunnel information is used to establish a tunnel between the user plane function network element (S-UPF) on the satellite and a PSA, and the third tunnel information is used to establish a tunnel between the user plane function network element (S-UPF) on the satellite and a peer user plane function network element (UPF).

6. The method according to claim 5, further comprising:
sending (S510), by the session management network element (SMF), the second tunnel information to the PSA; and
sending (S510), by the session management network element (SMF), the third tunnel information to the peer user plane function network element (UPF).

7. A communication method, comprising:
receiving (S710), by an access network device (S-gNB), first information from a terminal device (UE), wherein the first information indicates a service type requested by the terminal device (UE);
obtaining (S720), by the access network device (S-gNB) based on the first information, tunnel information corresponding to the service type; and
sending (S730), by the access network device (S-gNB), the tunnel information to a session management network element (SMF), wherein the tunnel information is used to establish a user plane connection corresponding to the service type; and
the access network device (S-gNB) is located on a satellite, and the session management network element (SMF) is located on the ground; and the tunnel information comprises second tunnel information of a user plane function network element (S-UPF) on the satellite,
wherein the method further comprises:
receiving (S905), by the access network device (S-gNB), second information from the session management network element (SMF) via a mobility management network element (AMF), wherein
the second information comprises one or more of the following:
tunnel information of a peer user plane function network element (UPF), tunnel information of a PSA selected by the session management network element (SMF), and a packet forwarding rule; and
sending (S906), by the access network device (S-gNB), the second information to the user plane network element (S-UPF) on the satellite.

8. The method according to claim 7, wherein
the service type is a terrestrial service that needs no user plane function network element (UPF), and the tunnel information comprises first tunnel information of the access network device (S-gNB), wherein the first tunnel information is used to establish a tunnel between the access network device (S-gNB) and a protocol data unit session anchor, PSA;
the service type is a terrestrial service that needs a user plane function network element (UPF), and the tunnel information comprises the second tunnel information of a user plane function network element (UPF) on the satellite, wherein the second tunnel information is used to establish a tunnel between the user plane function network element (UPF) on the satellite and a PSA;
the service type is a non-terrestrial service in which a PSA exists, and the tunnel information comprises second tunnel information of a user plane function network element (S-UPF) on the satellite and third tunnel information of the user plane function network element (S-UPF) on the satellite, wherein the second tunnel information is used to establish a tunnel between the user plane function network element (S-UPF) on the satellite and a PSA, and the third tunnel information is used to establish a tunnel between the user plane function network element (S-UPF) on the satellite and a peer user plane function network element (UPF); or
the service type is a non-terrestrial service in which no PSA exists, and the tunnel information comprises third tunnel information of a user plane function network element (S-UPF) on the satellite, wherein the third tunnel information is used to establish a tunnel between the user plane function network element (S-UPF) on the satellite and a peer user plane function network element (UPF).

9. The method according to claim 8, wherein
the obtaining (S720), by the access network device (S-gNB), tunnel information comprises:
obtaining (S902), by the access network device (S-gNB), the first tunnel information locally; and
obtaining (S902), by the access network device (S-gNB), the second tunnel information and/or the third tunnel information locally or from the user plane function network element (S-UPF) on the satellite.

10. The method according to any one of claims 7 to 9, further comprising:
sending (S908), by the access network device (S-gNB), a session response message to the mobility management network element (AMF), wherein the session response message does not comprise the first tunnel information of the access network device (S-gNB), and the first tunnel information is used to establish the tunnel between the access network device (S-gNB) and the protocol data unit session anchor, PSA.

11. A communication system comprising the following elements which carry out the respective steps of one or more of claims 1 to 6 or one or more of claims 7 to 10: a session management network element (SMF), a terminal device (UE), an access network device (S-gNB) on a satellite, a user plane function network element (S-UPF) on the satellite, and a protocol data unit session anchor, PSA.

12. A computer-readable storage medium, comprising a computer program or instructions, wherein when the computer program or the instructions are run on a computer, the computer is enabled to perform the method according to any one of claims 1 to 10.

## Patentansprüche

1. Kommunikationsverfahren, umfassend:
Erhalten (S210), durch ein Sitzungsmanagement-Netzelement (SMF), einer Kennung eines Datennetzes, DN, auf das ein Endgerät (UE) zugreift, und/oder einer Kennung eines Netzsegments, auf das das Endgerät (UE) zugreift;
Bestimmen (S220), durch das Sitzungsmanagement-Netzelement (SMF) basierend auf der Kennung des DN und/oder der Kennung des Netzsegments, eines von dem Endgerät (UE) angeforderten Diensttyps;
Anfordern (S230), durch das Sitzungsmanagement-Netzelement (SMF) von einem Zugangsnetzgerät (S-gNB) auf einem Satelliten, von Tunnelinformationen, die dem Diensttyp entsprechen; und
Empfangen (S240), durch das Sitzungsmanagement-Netzelement (SMF) von dem Zugangsnetzgerät (S-gNB), der Tunnelinformationen, die dem Diensttyp entsprechen; wobei
das Anfordern (S230), durch das Sitzungsmanagement-Netzelement (SMF) von einem Zugangsnetzgerät (S-gNB), der Tunnelinformationen, die dem Diensttyp entsprechen, Folgendes umfasst:
Anfordern (S404), durch das Sitzungsmanagement-Netzelement (SMF) von dem Zugangsnetzgerät (S-gNB), zweiter Tunnelinformationen eines Nutzerebenenfunktions-Netzelements (S-UPF) auf dem Satelliten, wobei der Diensttyp ein terrestrischer Dienst ist, der ein Nutzerebenenfunktions-Netzelement (UPF) benötigt, und die zweiten Tunnelinformationen dazu verwendet werden, einen Tunnel zwischen dem Nutzerebenenfunktions-Netzelement (S-UPF) auf dem Satelliten und einem Protokolldateneinheits-Sitzungsanker, PSA, herzustellen.

2. Verfahren nach Anspruch 1, wobei
das Anfordern (S230), durch das Sitzungsmanagement-Netzelement (SMF) von einem Zugangsnetzgerät (S-gNB), der Tunnelinformationen, die dem Diensttyp entsprechen, Folgendes umfasst:
Anfordern (S304), durch das Sitzungsmanagement-Netzelement (SMF) von dem Zugangsnetzgerät (S-gNB), erster Tunnelinformationen des Zugangsnetzgeräts (S-gNB), wobei der Diensttyp ein terrestrischer Dienst ist, der kein Nutzerebenenfunktions-Netzelement (UPF) benötigt, und die ersten Tunnelinformationen dazu verwendet werden, einen Tunnel zwischen dem Zugangsnetzgerät (S-gNB) und einem Protokolldateneinheits-Sitzungsanker, PSA, herzustellen.

3. Verfahren nach Anspruch 2, ferner umfassend:
Senden (S309), durch das Sitzungsmanagement-Netzelement (SMF), der ersten Tunnelinformationen an den PSA.

4. Verfahren nach Anspruch 1, ferner umfassend:
Senden (S410), durch das Sitzungsmanagement-Netzelement, der zweiten Tunnelinformationen an den PSA.

5. Verfahren nach Anspruch 1, wobei
das Anfordern (S230), durch das Sitzungsmanagement-Netzelement (SMF) von einem Zugangsnetzgerät (S-gNB), der Tunnelinformationen, die dem Diensttyp entsprechen, Folgendes umfasst:
Anfordern (S504), durch das Sitzungsmanagement-Netzelement (SMF) von dem Zugangsnetzgerät (S-gNB), zweiter Tunnelinformationen eines Nutzerebenenfunktions-Netzelements (S-UPF) auf dem Satelliten und dritter Tunnelinformationen des Nutzerebenenfunktions-Netzelements (S-UPF) auf dem Satelliten, wobei der Diensttyp ein nicht-terrestrischer Dienst ist, in dem ein Protokolldateneinheits-Sitzungsanker, PSA, existiert, die zweiten Tunnelinformationen dazu verwendet werden, einen Tunnel zwischen dem Nutzerebenenfunktions-Netzelement (S-UPF) auf dem Satelliten und einem PSA herzustellen und die dritten Tunnelinformationen dazu verwendet werden, einen Tunnel zwischen dem Nutzerebenenfunktions-Netzelement (S-UPF) auf dem Satelliten und einem Peer-Nutzerebenenfunktions-Netzelement (UPF) herzustellen.

6. Verfahren nach Anspruch 5, ferner umfassend:
Senden (S510), durch das Sitzungsmanagement-Netzelement (SMF), der zweiten Tunnelinformationen an den PSA; und
Senden (S510), durch das Sitzungsmanagement-Netzelement (SMF), der dritten Tunnelinformationen an das Peer-Nutzerebenenfunktions-Netzelement (UPF).

7. Kommunikationsverfahren, umfassend:
Empfangen (S710), durch ein Zugangsnetzgerät (S-gNB), erster Informationen von einem Endgerät (UE), wobei die ersten Informationen einen von dem Endgerät (UE) angeforderten Diensttyp angeben;
Erhalten (S720), durch das Zugangsnetzgerät (S-gNB) basierend auf den ersten Informationen, von Tunnelinformationen, die dem Diensttyp entsprechen; und
Senden (S730), durch das Zugangsnetzgerät (S-gNB), der Tunnelinformationen an ein Sitzungsmanagement-Netzelement (SMF), wobei die Tunnelinformationen dazu verwendet werden, eine Nutzerebenenverbindung herzustellen, die dem Diensttyp entspricht; und
sich das Zugangsnetzgerät (S-gNB) auf einem Satelliten befindet und sich das Sitzungsmanagement-Netzelement (SMF) am Boden befindet; und die Tunnelinformationen zweite Tunnelinformationen eines Nutzerebenenfunktions-Netzelements (S-UPF) auf dem Satelliten umfassen,
wobei das Verfahren ferner Folgendes umfasst:
Empfangen (S905), durch das Zugangsnetzgerät (S-gNB), von zweiten Informationen von dem Sitzungsmanagement-Netzelement (SMF) über ein Mobilitätsmanagement-Netzelement (AMF), wobei die zweiten Informationen eines oder mehrere der Folgenden umfassen:
Tunnelinformationen eines Peer-Nutzerebenenfunktions-Netzelements (UPF), Tunnelinformationen eines von dem Sitzungsmanagement-Netzelement (SMF) ausgewählten PSA und eine Paketweiterleitungsregel; und
Senden (S906), durch das Zugangsnetzgerät (S-gNB), der zweiten Informationen an das Nutzerebenen-Netzelement (S-UPF) auf dem Satelliten.

8. Verfahren nach Anspruch 7, wobei
der Diensttyp ein terrestrischer Dienst ist, der kein Nutzerebenenfunktions-Netzelement (UPF) benötigt, und die Tunnelinformationen erste Tunnelinformationen des Zugangsnetzgeräts (S-gNB) umfassen, wobei die ersten Tunnelinformationen dazu verwendet werden, einen Tunnel zwischen dem Zugangsnetzgerät (S-gNB) und einem Protokolldateneinheits-Sitzungsanker, PSA, herzustellen;
der Diensttyp ein terrestrischer Dienst ist, der ein Nutzerebenenfunktions-Netzelement (UPF) benötigt, und die Tunnelinformationen die zweiten Tunnelinformationen eines Nutzerebenenfunktions-Netzelements (UPF) auf einem Satelliten umfassen, wobei die zweiten Tunnelinformationen dazu verwendet werden, einen Tunnel zwischen dem Nutzerebenenfunktions-Netzelement (UPF) auf dem Satelliten und einem PSA herzustellen; der Diensttyp ein nicht-terrestrischer Dienst ist, in dem ein PSA existiert, und die Tunnelinformationen zweite Tunnelinformationen eines Nutzerebenenfunktions-Netzelements (S-UPF) auf dem Satelliten und dritte Tunnelinformationen des Nutzerebenenfunktions-Netzelements (S-UPF) auf dem Satelliten umfassen, wobei die zweiten Tunnelinformationen dazu verwendet werden, einen Tunnel zwischen dem Nutzerebenenfunktions-Netzelement (S-UPF) auf dem Satelliten und einem PSA herzustellen und die dritten Tunnelinformationen dazu verwendet werden, einen Tunnel zwischen dem Nutzerebenenfunktions-Netzelement (S-UPF) auf dem Satelliten und einem Peer-Nutzerebenenfunktions-Netzelement (UPF) herzustellen; oder
der Diensttyp ein nicht-terrestrischer Dienst ist, in dem kein PSA existiert, und die Tunnelinformationen dritte Tunnelinformationen eines Nutzerebenenfunktions-Netzelements (S-UPF) auf dem Satelliten umfassen, wobei die dritten Tunnelinformationen dazu verwendet werden, einen Tunnel zwischen dem Nutzerebenenfunktions-Netzelement (S-UPF) auf dem Satelliten und einem Peer-Nutzerebenenfunktions-Netzelement (UPF) herzustellen.

9. Verfahren nach Anspruch 8, wobei
das Erhalten (S720), durch das Zugangsnetzgerät (S-gNB), von Tunnelinformationen Folgendes umfasst:
Erhalten (S902), durch das Zugangsnetzgerät (S-gNB), der ersten Tunnelinformationen lokal; und
Erhalten (S902), durch das Zugangsnetzgerät (S-gNB), der zweiten Tunnelinformationen und/oder der dritten Tunnelinformationen lokal oder von dem Nutzerebenenfunktions-Netzelement (S-UPF) auf dem Satelliten.

10. Verfahren nach einem der Ansprüche 7 bis 9, ferner umfassend: Senden (S908), durch das Zugangsnetzgerät (S-gNB), einer Sitzungsantwortnachricht an das Mobilitätsmanagement-Netzelement (AMF), wobei die Sitzungsantwortnachricht nicht die ersten Tunnelinformationen des Zugangsnetzgeräts (S-gNB) umfasst und die ersten Tunnelinformationen dazu verwendet werden, den Tunnel zwischen dem Zugangsnetzgerät (S-gNB) und dem Protokolldateneinheits-Sitzungsanker, PSA, herzustellen.

11. Kommunikationssystem, umfassend die folgenden Elemente, die die jeweiligen Schritte eines oder mehrerer der Ansprüche 1 bis 6 oder eines oder mehrerer der Ansprüche 7 bis 10 ausführen: ein Sitzungsmanagement-Netzelement (SMF), ein Endgerät (UE), ein Zugangsnetzgerät (S-gNB) auf einem Satelliten, ein Nutzerebenenfunktions-Netzelement (S-UPF) auf dem Satelliten und ein Protokolldateneinheits-Sitzungsanker (PSA).

12. Computerlesbares Speichermedium, umfassend ein Computerprogramm oder Anweisungen, wobei, wenn das Computerprogramm oder die Anweisungen auf einem Computer ausgeführt werden, der Computer in die Lage versetzt wird, das Verfahren nach einem der Ansprüche 1 bis 10 durchzuführen.

## Revendications

1. Procédé de communication, comprenant :
l'obtention (S210), par un élément de réseau de gestion de session (SMF), d'un identifiant d'un réseau de données, DN, auquel accède un dispositif terminal (UE) et/ou d'un identifiant d'une tranche de réseau à laquelle accède le dispositif terminal (UE) ;
la détermination (S220), par l'élément de réseau de gestion de session (SMF) sur la base de l'identifiant du DN et/ou de l'identifiant de la tranche de réseau, d'un type de service demandé par le dispositif terminal (UE) ;
la demande (S230), par l'élément de réseau de gestion de session (SMF) à partir d'un dispositif de réseau d'accès (S-gNB) sur un satellite, d'informations de tunnel correspondant au type de service ; et
la réception (S240), par l'élément de réseau de gestion de session (SMF) à partir du dispositif de réseau d'accès (S-gNB), des informations de tunnel correspondant au type de service ; dans lequel
la demande (S230), par l'élément de réseau de gestion de session (SMF) à partir d'un dispositif de réseau d'accès (S-gNB), d'informations de tunnel correspondant au type de service comprend :
la demande (S404), par l'élément de réseau de gestion de session (SMF) à partir du dispositif de réseau d'accès (S-gNB), de deuxièmes informations de tunnel d'un élément de réseau de fonction de plan utilisateur (S-UPF) sur le satellite, dans lequel le type de service est un service terrestre qui nécessite un élément de réseau de fonction de plan utilisateur (UPF), et les deuxièmes informations de tunnel sont utilisées pour établir un tunnel entre l'élément de réseau de fonction de plan utilisateur (S-UPF) sur le satellite et une ancre de session d'unité de données de protocole, PSA.

2. Procédé selon la revendication 1, dans lequel
la demande (S230), par l'élément de réseau de gestion de session (SMF) à partir d'un dispositif de réseau d'accès (S-gNB), d'informations de tunnel correspondant au type de service comprend :
la demande (S304), par l'élément de réseau de gestion de session (SMF) à partir du dispositif de réseau d'accès (S-gNB), de premières informations de tunnel du dispositif de réseau d'accès (S-gNB), dans lequel le type de service est un service terrestre qui ne nécessite pas d'élément de réseau de fonction de plan utilisateur (UPF), et les premières informations de tunnel sont utilisées pour établir un tunnel entre le dispositif de réseau d'accès (S-gNB) et une ancre de session d'unité de données de protocole, PSA.

3. Procédé selon la revendication 2, comprenant en outre :
l'envoi (S309), par l'élément de réseau de gestion de session (SMF), des premières informations de tunnel à la PSA.

4. Procédé selon la revendication 1, comprenant en outre :
l'envoi (S410), par l'élément de réseau de gestion de session, des deuxièmes informations de tunnel à la PSA.

5. Procédé selon la revendication 1, dans lequel
la demande (S230), par l'élément de réseau de gestion de session (SMF) à partir d'un dispositif de réseau d'accès (S-gNB), d'informations de tunnel correspondant au type de service comprend :
la demande (S504), par l'élément de réseau de gestion de session (SMF) à partir du dispositif de réseau d'accès (S-gNB), de deuxièmes informations de tunnel d'un élément de réseau de fonction de plan utilisateur (S-UPF) sur le satellite et de troisièmes informations de tunnel de l'élément de réseau de fonction de plan utilisateur (S-UPF) sur le satellite, dans lequel le type de service est un service non terrestre dans lequel existe une ancre de session d'unité de données de protocole, PSA, les deuxièmes informations de tunnel sont utilisées pour établir un tunnel entre l'élément de réseau de fonction de plan utilisateur (S-UPF) sur le satellite et une PSA, et les troisièmes informations de tunnel sont utilisées pour établir un tunnel entre l'élément de réseau de fonction de plan utilisateur (S-UPF) sur le satellite et un élément de réseau de fonction de plan utilisateur homologue (UPF).

6. Procédé selon la revendication 5, comprenant en outre :
l'envoi (S510), par l'élément de réseau de gestion de session (SMF), des deuxièmes informations de tunnel à la PSA ; et
l'envoi (S510), par l'élément de réseau de gestion de session (SMF), des troisièmes informations de tunnel à l'élément de réseau de fonction de plan utilisateur homologue (UPF).

7. Procédé de communication, comprenant :
la réception (S710), par un dispositif de réseau d'accès (S-gNB), de premières informations à partir d'un dispositif terminal (UE), dans lequel les premières informations indiquent un type de service demandé par le dispositif terminal (UE) ;
l'obtention (S720), par le dispositif de réseau d'accès (S-gNB) sur la base des premières informations, d'informations de tunnel correspondant au type de service ; et
l'envoi (S730), par le dispositif de réseau d'accès (S-gNB), des informations de tunnel à un élément de réseau de gestion de session (SMF), dans lequel les informations de tunnel sont utilisées pour établir une connexion de plan utilisateur correspondant au type de service ; et
le dispositif de réseau d'accès (S-gNB) est situé sur un satellite, et l'élément de réseau de gestion de session (SMF) est situé au sol ; et les informations de tunnel comprennent des deuxièmes informations de tunnel d'un élément de réseau de fonction de plan utilisateur (S-UPF) sur le satellite,
dans lequel le procédé comprend en outre :
la réception (S905), par le dispositif de réseau d'accès (S-gNB), de secondes informations à partir de l'élément de réseau de gestion de session (SMF) via un élément de réseau de gestion de mobilité (AMF), dans lequel
les secondes informations comprennent un ou plusieurs des éléments suivants :
des informations de tunnel d'un élément de réseau de fonction de plan utilisateur homologue (UPF), des informations de tunnel d'une PSA sélectionnée par l'élément de réseau de gestion de session (SMF) et une règle de transfert de paquets ; et
l'envoi (S906), par le dispositif de réseau d'accès (S-gNB), des secondes informations à l'élément de réseau de plan utilisateur (S-UPF) sur le satellite.

8. Procédé selon la revendication 7, dans lequel
le type de service est un service terrestre qui ne nécessite pas d'élément de réseau de fonction de plan utilisateur (UPF), et les informations de tunnel comprennent des premières informations de tunnel du dispositif de réseau d'accès (S-gNB), dans lequel les premières informations de tunnel sont utilisées pour établir un tunnel entre le dispositif de réseau d'accès (S-gNB) et une ancre de session d'unité de données de protocole, PSA ;
le type de service est un service terrestre qui nécessite un élément de réseau de fonction de plan utilisateur (UPF), et les informations de tunnel comprennent les deuxièmes informations de tunnel d'un élément de réseau de fonction de plan utilisateur (UPF) sur le satellite, dans lequel les deuxièmes informations de tunnel sont utilisées pour établir un tunnel entre l'élément de réseau de fonction de plan utilisateur (UPF) sur le satellite et une PSA ;
le type de service est un service non terrestre dans lequel existe une PSA, et les informations de tunnel comprennent des deuxièmes informations de tunnel d'un élément de réseau de fonction de plan utilisateur (S-UPF) sur le satellite et des troisièmes informations de tunnel de l'élément de réseau de fonction de plan utilisateur (S-UPF) sur le satellite, dans lequel les deuxièmes informations de tunnel sont utilisées pour établir un tunnel entre l'élément de réseau de fonction de plan utilisateur (S-UPF) sur le satellite et une PSA, et les troisièmes informations de tunnel sont utilisées pour établir un tunnel entre l'élément de réseau de fonction de plan utilisateur (S-UPF) sur le satellite et un élément de réseau de fonction de plan utilisateur homologue (UPF) ; ou
le type de service est un service non terrestre dans lequel aucune PSA n'existe, et les informations de tunnel comprennent des troisièmes informations de tunnel d'un élément de réseau de fonction de plan utilisateur (S-UPF) sur le satellite, dans lequel les troisièmes informations de tunnel sont utilisées pour établir un tunnel entre l'élément de réseau de fonction de plan utilisateur (S-UPF) sur le satellite et un élément de réseau de fonction de plan utilisateur homologue (UPF).

9. Procédé selon la revendication 8, dans lequel
l'obtention (S720), par le dispositif de réseau d'accès (S-gNB), d'informations de tunnel comprend :
l'obtention (S902), par le dispositif de réseau d'accès (S-gNB), des premières informations de tunnel localement ; et
l'obtention (S902), par le dispositif de réseau d'accès (S-gNB), des deuxièmes informations de tunnel et/ou des troisièmes informations de tunnel localement ou à partir de l'élément de réseau de fonction du plan utilisateur (S-UPF) sur le satellite.

10. Procédé selon l'une quelconque des revendications 7 à 9, comprenant en outre :
l'envoi (S908), par le dispositif de réseau d'accès (S-gNB), d'un message de réponse de session à l'élément de réseau de gestion de mobilité (AMF), dans lequel le message de réponse de session ne comprend pas les premières informations de tunnel du dispositif de réseau d'accès (S-gNB), et les premières informations de tunnel sont utilisées pour établir le tunnel entre le dispositif de réseau d'accès (S-gNB) et l'ancre de session d'unité de données de protocole, PSA.

11. Système de communication comprenant les éléments suivants qui mettent en œuvre les étapes respectives d'une ou de plusieurs des revendications 1 à 6 ou d'une ou de plusieurs des revendications 7 à 10 : un élément de réseau de gestion de session (SMF), un dispositif terminal (UE), un dispositif de réseau d'accès (S-gNB) sur un satellite, un élément de réseau de fonction de plan utilisateur (S-UPF) sur le satellite et une ancre de session d'unité de données de protocole, PSA.

12. Support de stockage lisible par ordinateur, comprenant un programme informatique ou des instructions, dans lequel, lorsque le programme informatique ou les instructions sont exécutés sur un ordinateur, l'ordinateur est activé pour réaliser le procédé selon l'une quelconque des revendications 1 à 10.
